# EUROPÄISCHE PATENTSCHRIFT

(11) **EP 0 300 437 B1**
(45) Veröffentlichungstag und Bekanntmachung des Hinweises auf die Patenterteilung: **20.04.1994**
(21) Anmeldenummer: 88111631.3
(22) Anmeldetag: 20.07.1988
(51) Int. Cl.: A01B 59/042, A01B 51/02

(54) **Rasen- oder Gartentraktor mit anbaubarem Anbaugerät**
Lawn- or garden tractor with an auxiliary device
Tracteur à gazon ou à jardin avec un appareil porté

(30) Priorität: 23.07.1987 US 76638
(43) Veröffentlichungstag der Anmeldung: 25.01.1989
(73) Patentinhaber: DEERE & COMPANY, Moline, Illinois 61265 (US)
(72) Erfinder: Schmid, Steven Lawrence, Agency Iowa 52530 (US); Hining, Larry Demar, Ottumwa Iowa 52501 (US); O'Toole, Frank Kenneth, Ottumwa Iowa 52501 (US)
(74) Vertreter: Feldmann, Bernhard

(56) Entgegenhaltungen:
- DE-C- 950 608
- US-A- 3 426 458
- US-A- 3 508 386
- US-A- 4 600 070

## Beschreibung

Die Erfindung betrifft einen Rasen- oder Gartentraktor mit anbaubarem Anbaugerät gemäß dem Oberbegriff des Patentanspruchs 1.

Arbeitsgeräte, wie beispielsweise Bodenfräsen, Planierschilder und Schneeschleudern bzw. -fräsen, sind häufig so ausgebildet, daß sie an der Vorderseite bzw. an der Rückseite eines Rasen- bzw. Gartentraktors montierbar sind. Derartige Anbaugeräte weisen gewöhnlich ein hohes Gewicht auf und sind schwierig zu handhaben. Es ist insbesondere für eine Person häufig äußerst beschwerlich, ein Anbaugerät am Traktor zu montieren, zu demontieren bzw. zu dem Abstellplatz zu schaffen. Ferner erfordert die Montage der Anbaugeräte, welche 30 bis 60 min dauern kann, häufig spezielle Werkzeuge.

Eine Befestigungseinrichtung zwischen einem Traktor und einem Anbaugerät, hier insbesondere einer Bodenfräse, geht aus der US-A-4 600 070 hervor.

Durch die US-A-3 508 386 ist eine Kupplungs- und Traganordnung für Anbaugeräte mit den gattungsgemäßen Merkmalen der vorliegenden Erfindung bekannt geworden, durch die sich ein Mähwerk unter dem mittleren Bereich eines Traktors vertikal verstellen läßt. Die Vorrichtung enthält einen am Traktorrahmen befestigbaren Befestigungsrahmen, der eine sich zwischen zwei seitlichen Befestigungsplatten quer zur Fahrtrichtung erstreckende Befestigungsstange und in jeder Befestigungsplatte einen nach hinten offenen Schlitz aufweist. Bei der Montage wird der Befestigungsrahmen von vorne derart an den Traktorrahmen herangeführt, daß seine Befestigungsstange von nach vorne offenen Schlitzen in zwei seitlich am Traktorrahmen befestigten Seitenblechen aufgenommen wird und die Schlitze der Befestigungsplatten jeweils einen sich quer zur Fahrtrichtung über den Traktorrahmen hervorstehenden Schraubenbolzen aufnehmen. An dem Befestigungsrahmen sind seitliche unter dem Traktorrahmen verlaufende, sich nach hinten erstreckende Lenker angelenkt, deren hintere Enden sich durch eine Mechanik in der Höhe verstellen lassen. Die Lenker enthalten Aufnahmen, an denen sich das Mähwerk befestigen läßt. Die Montage ist relativ zeitaufwendig und erfordert wegen des hohen Gewichtes der zu bewegenden Teile und der schlechten Zugänglichkeit unter dem Traktor wenigstens zwei Personen.

Die mit der Erfindung zu lösende Aufgabe wird darin gesehen, einen Rasen- oder Gartentraktor mit anbaubarem Anbaugerät der gattungsgemäßen genannten Art anzugeben, der es auch einer Person erlaubt, ein Anbaugerät leicht und schnell am Rasen- und Gartentraktor zu befestigen. Hierbei soll es nicht erforderlich sein, das Anbaugerät anzuheben. Sofern das Anbaugerät durch eine Traktorriemenscheibe und einen Antriebsriemen angetrieben wird, soll die Riemenantriebsanordnung eine einfache Montage, ein sauberes Spannen und einen sicheren Betrieb des Antriebsriemens ermöglichen.

Die Aufgabe wird bei einem Rasen- oder Gartentraktor mit anbaubarem Anbaugerät der gattungsgemäßen genannten Art erfindungsgemäß durch die kennzeichnenden Merkmale des Patentanspruchs 1 gelöst. Durch die Wahl der Befestigungslage der Transporträder läßt sich das Anbaugerät um den Auflagepunkt der Transportmittel mühelos verschwenken.

Die relative Lage zwischen den Transportmitteln und den Befestigungsmitteln des Arbeitsgeräterahmens wird zweckmäßigerweise so gewählt, daß für die Montage des Anbaugerätes dieses auf den Transportmitteln leicht durch eine Person zwischen die Vorder- bzw. Hinterräder des Traktors verfahren werden kann, so daß die Befestigungsmittel des Anbaugeräterahmens mit den Befestigungsmitteln des Traktorrahmens in Eingriff gebracht werden können.

Vorzugsweise sind die Befestigungsmittel am Traktorrahmen zapfen- bzw. bolzenförmig ausgebildet, wobei die Zapfenachse quer zur Fahrtrichtung des Traktors ausgerichtet ist. Die Befestigungsmittel des Anbaugerätes ragen konsolen- bzw. laschenförmig über den Anbaugeräterahmen hinaus und sind so ausgebildet, daß sie mit den zapfenförmigen Befestigungsmitteln des Traktorrahmens in Eingriff gebracht werden können.

Alternativ oder in Ergänzung hierzu kann es auch zweckmäßig sein, die Befestigungsmittel des Traktors und des Arbeitsgerätes mit quer zur Fahrtrichtung verlaufenden Bohrungen zu versehen, wobei bei der Montage des Arbeitsgerätes durch korrespondierende Bohrungen Bolzen steckbar sind.

Sofern das Arbeitsgerät, z. B. ein Planierschild oder eine Schneeschleuder, am vorderen Ende des Traktors montierbar ist, schlägt eine vorteilhafte Ausgestaltung der Erfindung vor, daß wenigstens zwei der Befestigungsmittel des Traktorrahmens in Fahrtrichtung hintereinander und zwischen den Paaren der Vorder- und Hinterräder des Traktors angeordnet sind.

Hierbei kann es von Vorteil sein, als Befestigungsmittel auf dem hinteren Ende des Anbaugeräterahmens ein Paar quer beabstandeter Konsolen vorzusehen, die nach hinten offene Aussparungen aufweisen. Bei der Montage des Arbeitsgerätes am Traktor kann ersteres zwischen den Vorderrädern des Traktors so weit zurückgerollt werden, bis die genannten Aussparungen die bolzenförmigen Befestigungsmittel des Traktorrahmens umfassen. Hierbei ist es zweckmäßig, Verriegelungsmittel vorzusehen, durch die verhindert wird, daß sich die Bolzen aus den Aussparungen befreien.

In zweckmäßiger Weise bilden die genannten zapfenförmigen Befestigungsmittel eine horizontale Drehachse, um die der Arbeitsgeräterahmen verschwenkbar ist. Am Traktorrahmen sind Anhebemittel angeordnet, welche mit vorderen Befestigungsmitteln des Anbaugeräterahmens derart in Verbindung stehen, daß durch Betätigung des Anhebemittels eine Höhenverstellung des Arbeitswerkzeuges möglich ist.

Vorzugsweise besteht der Arbeitsgeräterahmen aus rechten und linken in Längsrichtung verlaufenden Seitenteilen, die an ihrem hinteren Ende durch ein Querteil miteinander verbunden sind. Am hinteren Ende der Rahmenkonstruktion ist ein Paar quer beabstandeter Konsolen angeordnet.

Vorzugsweise sind die Transportmittel des Arbeitsgeräterahmens in der Nähe des Arbeitswerkzeuges befestigt.

Gemäß einer vorteilhaften Ausgestaltung der Erfindung ist das Arbeitswerkzeug ein Planierschild.

Sofern es sich bei dem Anbaugerät um ein solches handelt, bei dem die Arbeitswerkzeuge durch den Traktor antreibbar sind, sieht eine bevorzugte Ausgestaltung der Erfindung vor, daß der Antriebsriemen durch Riemenführungen im Eingriffsbereich der Riemenscheiben des Anbaugerätes gehalten wird und eine Riemenschleife zur Aufnahme der Antriebsriemenscheibe des Traktors bildet. Dies erleichtert bei der Montage des Anbaugerätes am Traktor das Anbringen des Antriebsriemens, da es nur noch erforderlich ist, die Riemenschleife über die Traktorriemenscheibe zu ziehen. Es kann zweckmäßig sein, eine Riemenspannvorrichtung vorzusehen.

Eine vorteilhafte Riemenantriebsanordnung sowie eine Riemenspannvorrichtung können den Merkmalen der Ansprüche 12 und 13 entnommen werden. Die Riemenspannvorrichtung kann wahlweise so betätigt werden, daß die Riemenschleife gelockert bzw. gestrafft wird, um den Eingriff des Riemens mit der Antriebsriemenscheibe des Traktors zu lösen bzw. herzustellen.

Für den Fall, daß das Arbeitswerkzeug am hinteren Ende des Anbaugeräterahmens befestigt ist, sieht eine vorteilhafte Ausgestaltung der Erfindung vor, daß sich wenigstens ein erstes Befestigungsmittel im hinteren Endbereich des Traktorrahmens und wenigstens ein zweites Befestigungsmittel im Bereich zwischen den Vorder- und Hinterrädern des Traktors befinden.

Sofern der Traktorrahmen quer zur Fahrtrichtung verlaufende, zapfenförmige Befestigungsmittel aufweist, ist es zweckmäßig, im hinteren Bereich des Anbaugeräterahmens, jedoch vor der Lage der Transportmittel ein erstes Paar quer zur Fahrtrichtung beabstandeter Konsolen mit nach vorne offenen Aussparungen vorzusehen. Diese Ausführung ermöglicht eine einfache Montage und Demontage des Anbaugerätes am Traktor, indem das Anbaugerät so weit nach vorne verschoben wird, bis die Aussparungen die am Traktorrahmen befindlichen zapfenförmigen Befestigungselemente umfassen. Auch hier ist es von Vorteil, Verriegelungselemente vorzusehen, durch die ein unbeabsichtigtes Lösen der zapfenförmigen Befestigungsmittel aus den Aussparungen verhindert wird.

Vorzugsweise weist der Anbaugeräterahmen in seinem vorderen Bereich wenigstens eine zweite Konsole mit nach oben offener Aussparung auf, die zur lösbaren Aufnahme des zweiten vorderen, zapfenförmigen Befestigungsmittels des Traktorrahmens geeignet ist. Das im vorhergehenden Absatz beschriebene erste Paar Konsolen und die Transportmittel sind in ihrer relativen Lage zu dem Anbaugeräteschwerpunkt und der zweiten Konsole derart angeordnet, daß dann, wenn die vordere Verbindung zwischen Anbaugerät und Traktor gelöst ist, das Anbaugerät frei um die Achse des hinteren Befestigungsmittels verschwenkbar ist, wobei das Gewicht des Anbaugerätes die nach oben offene Aussparung der zweiten Konsole des Anbaugerätes gegen das zapfenförmige Befestigungsmittel des Traktorrahmens drückt.

In vorteilhafter Weise ist im vorderen Bereich des Anbaugeräterahmens in der Nähe des zweiten Befestigungsmittels wenigstens ein in vertikaler Richtung verschwenkbares Stützglied angeordnet. Dieses Stützglied läßt sich vertikal aufrichten. In dieser Lage kann es sich am Traktorrahmen abstützen, so daß der Anbaugeräterahmen nach unten gedrückt wird. Vorzugsweise erfolgt die Abstützung am zapfenförmigen Befestigungsmittel des Traktorrahmens. Durch das Abstützen wird der vordere Bereich des Anbaugeräterahmens nach unten gedrückt. Dabei verschwenkt sich der Anbaugeräterahmen um die Achse der ersten Befestigungsmittel, so daß der hintere Teil des Anbaugeräterahmens angehoben wird. Hierdurch gelangen die Transportmittel aus dem Eingriffsbereich mit dem Untergrund und lassen sich demontieren bzw. nach oben verschwenken.

Für Anbaugeräte mit durch den Traktor angetriebenen Arbeitswerkzeugen sieht eine bevorzugte Ausgestaltung der Erfindung eine Riemenantriebsanordnung vor, die einen über eine erste Riemenscheibe laufenden Primärantriebsriemen enthält, welcher eine Riemenschleife zur Aufnahme der Antriebsscheibe des Traktors bildet. Ferner enthält die Riemenantriebsanordnung einen über eine zweite Riemenscheibe laufenden, nachgeordneten Sekundärantriebsriemen, der in ständigem Eingriff mit der Antriebswelle des Arbeitsgerätes steht. Diese erste und zweite Riemenscheibe sind über eine gemeinsame Antriebswelle miteinander verbunden. Diese Ausbildung hat den Vorteil, daß bei der Montage des Anbaugerätes am Traktor der zweite Antriebsriemen keiner besonderen Montage bedarf, während der erste Antriebsriemen sich problemlos über die Antriebsriemenscheiben des Traktors legen läßt.

Eine zweckmäßige Ausgestaltung eines Anbaugerätes mit Primär- und Sekundärantriebsriemen geht aus den Merkmalen des Anspruches 20 hervor.

Vorzugsweise läßt sich das am hinteren Ende des Anbaugeräterahmens befestigte Arbeitswerkzeug um eine horizontale Achse verschwenken. Insbesondere kann eine derartige Verschwenkung vom Fahrersitz des Traktors aus ausgelöst werden. Diese Ausführung ermöglicht es, das Arbeitswerkzeug während des Transportes und der Montage des Anbaugerätes nach oben zu verschwenken, so daß es nicht mit dem Boden in Berührung kommt. Verriegelungsmittel am Arbeitsgeräterahmen halten das Arbeitswerkzeug in einer relativ zum Arbeitsgeräterahmen angehobenen Lage. Zur Betätigung der Verschwenkung ist ein am Arbeitsgeräterahmen befestigtes Anhebegestänge vorgesehen. Der Traktorrahmen trägt ein Hebesystem, welches eine quer verlaufende Hubwelle mit einem daran befestigten Kurbelarm enthält, die mit dem Anhebegestänge des Arbeitsgeräterahmens verbindbar sind, um ein Anheben oder Absenken des Arbeitswerkzeuges zu ermöglichen, wenn die Verriegelungsmittel gelöst sind.

Um ein Verschwenken der Transportmittel in eine oder aus einer Aufbewahrungslage zu ermöglichen, ist es zweckmäßig, die Transportmittel auf einem verschwenkbaren Gestänge zu befestigen. Die heruntergeschwenkten Transportmittel ermöglichen ein Verfahren des Anbaugerätes beim Verwahren und ein Abstützen des Anbaugerätes bei dessen Montage am Traktor. Nachdem das Arbeitsgerät am Traktor befestigt ist, werden die Transportmittel hochgeschwenkt, so daß sie beim Arbeitsvorgang nicht stören.

Vorzugsweise handelt es sich bei den Transportmitteln um Räder, welche über Haltearme am Anbaugeräterahmen in der Nähe des Arbeitswerkzeuges befestigbar sind.

Die vorliegende Erfindung erstreckt sich auch auf Rasen-und Gartentraktoren mit anbaubaren Arbeitsgeräten, die eine Befestigungsvorrichtung gemäß der vorstehenden Merkmale aufweisen.

Anhand der Zeichnung, die mehrere Ausführungsbeispiele der Erfindung zeigt, sollen die Erfindung sowie weitere Vorteile und vorteilhafte Ausgestaltungen der Erfindung näher beschrieben und erläutert werden.

Es zeigt:
- Fig. 1a: eine perspektivische, schematische Darstellung eines Rasen- und Gartentraktorrahmens und eines Hebesystems aus der Sicht von rechts vorne,
- Fig. 1b: eine perspektivische, schematische Darstellung einer Fräse aus der Sicht von rechts vorne, bei der die Befestigungspunkte für die Befestigung der Fräse am Traktorrahmen erkennbar sind,
- Fig. 2: eine rechtsseitige Seitenansicht, durch welche die Verbindung zwischen Fräsenrahmen und Traktorrahmen sowie die Ankopplung des Traktorhebesystems mit dem Fräsenzinkengehäuse dargestellt ist,
- Fig. 3: die Draufsicht eines Ein- und Auskuppelmechanismusses für den Riemenantrieb der Fräse,
- Fig. 4 - 7: rechte Seitenansichten der Fräse und des Traktorrahmens, bei denen zur besseren Klarheit einige Teile nicht dargestellt wurden und die eine Aufeinanderfolge von Positionen darstellen, in welche die Fräse bewegt wird, wenn sie mit dem Traktor verbunden wird,
- Fig. 8: eine perspektivische, rechte Vorderansicht einer Schneeschleuder, welche zur Befestigung an einem Traktorrahmen gemäß Fig. 1a angepaßt ist,
- Fig. 9: eine rechte Seitenansicht eines hinteren Satzes einstellbarer Riemenleitrollen für einen Schneeschleuderantrieb,
- Fig. 10: eine rückseitige Ansicht der Riemenleitrolle aus der Sicht gemäß der Linie 10 - 10 gemäß Fig. 9 und
- Fig. 11: eine perspektivische, rechte Vorderansicht eines Planierschildeinsatzes, der für die Befestigung an einen Traktorrahmen gemäß Fig. 1a angepaßt ist.

Es soll hervorgehoben werden, daß die besonderen Arbeitsgeräte, die im folgenden beschrieben werden, lediglich beispielhaft für Arbeitsgeräte stehen, bei denen die vorliegende Erfindung sinnvollerweise angewendet werden kann.

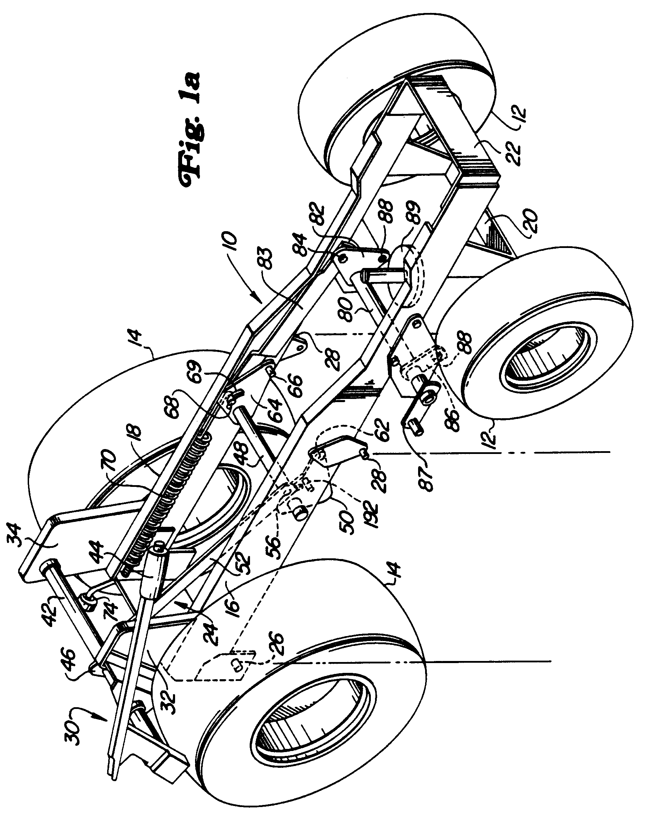

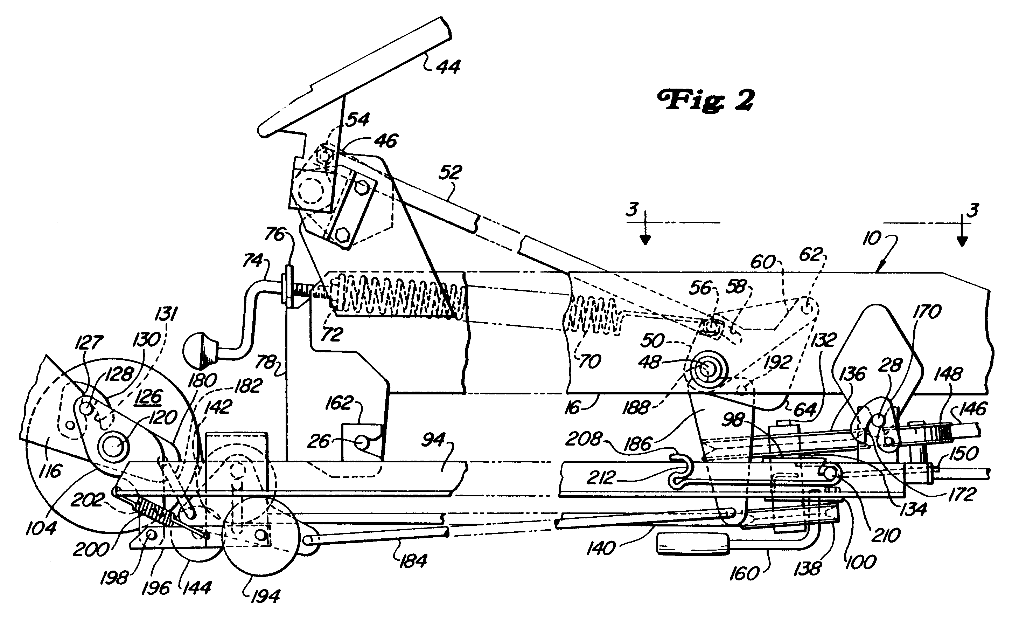

In den Figuren 1a und 2 ist ein Traktorrahmen 10 dargestellt, der von Paaren von Vorder- und Hinterrädern 12 und 14 getragen wird und in Querrichtung beabstandete, längs verlaufende, rechts- und linksseitige Träger 16 und 18 enthält, welche an ihrem vorderen Ende durch ein vorderes Querteil 20 miteinander verbunden sind. Der Traktorrahmen 10 enthält ferner am vorderen Ende eine Gewichtsträgerkonsole 22 und am hinteren Ende eine Anbaukonstruktion 24. Ein Paar hinterer Bolzen oder Stiftschrauben 26, die der Befestigung des Arbeitsgerätes dienen und von denen lediglich eine dargestellt wurde, sind in gegenüberliegenden, längs verlaufenden Teilen der Anbaukonstruktion 24 befestigt und stehen nach außen vor. Die Bolzen 26 fluchten axial miteinander. Ein Paar vorderer Bolzen oder Stiftschrauben 28, die ebenfalls der Befestigung des Arbeitsgerätes dienen, sind an den Trägern 16 und 18 befestigt und ragen wie die Bolzen 26 ebenfalls nach außen. Die Bolzen 28 sind in etwa in der Mitte der gegenüberliegenden Träger 16 und 18 angeordnet.

Am Traktorrahmen 10 ist ein handbetätigbares Hebesystem 30 befestigt, welches dem Anheben und Absenken des Arbeitsgerätes, welches am Traktorrahmen 10 befestigt wird, dient. Insbesondere enthält das Hebesystem 30 ein Paar nach oben gerichteter Hubwellenträger 32 und 34, deren unterer Bereich mit dem äußeren, hinteren Oberflächenbereich der Träger 16 und 18 verschweißt ist. Eine horizontale, quer verlaufende Hubwelle 42 ist drehbar in den Trägern 32 und 34 gelagert. Am rechten Ende der Hubwelle 42 ist ein Hebegriff 44 befestigt. Ferner ist an der Hubwelle 42 an einer Stelle innerhalb des Trägers 32 ein in Form einer Platte ausgebildeter Kurbelarm 46 befestigt. In der Nähe, jedoch etwas hinter dem Paar vorderer Bolzen 28, ist zwischen den Trägern 16 und 18 eine horizontale, quer verlaufende Querwelle 48 drehbar gelagert. Ein Winkelhebel 50 ist am rechten Endbereich der Querwelle 48 befestigt und gemeinsam mit dem Kurbelarm 46 und einem Haupthebeverbindungsglied 52 in Längsrichtung ausgerichtet. Das hintere Ende des Verbindungsgliedes 52 ist über den Bolzen 54 (Fig. 2) mit dem Kurbelarm 46 drehbar verbunden. Das vordere Ende des Verbindungsgliedes 52 ist über den Bolzen 56 mit dem Winkelhebel 50 verbunden. Der Bolzen 56 ist in einem bogenförmigen, spielfreien Schlitz 58 geführt. Der Winkelhebel 50 enthält einen vorwärts gerichteten, überstehenden Schenkel, welcher einen nach innen überstehenden Bolzen oder eine Stiftschraube 62 trägt, wobei der Bolzen 62 geeignet ist, ein Ende eines nicht dargestellten Anhebegliedes eines Mähwerkes aufzunehmen. Am linken Ende der Querwelle 48 ist ein Kurbelarm 64, welcher als dreieckförmige Platte ausgebildet ist, befestigt. Ein nach innen gerichteter Bolzen oder eine Stiftschraube 66 ist in einer nach vorne gerichteten Ecke des Kurbelarmes 64 befestigt und ist axial zu dem Bolzen oder der Stiftschraube 62 ausgerichtet. Ein Verbindungsbolzen 68 ist in einem spielfreien Schlitz 69 in einer oberen Ecke des Kurbelarmes 64 angeordnet. An dem Bolzen 68 ist das vordere Ende einer hubunterstützenden Feder 70 befestigt, deren hinteres Ende sich an einem Federbefestigungsteil 72 abstützt. Das Federbefestigungsteil 72 ist mit einer Gewindebohrung versehen, die das Gewindeende einer handbetätigbaren Schraubenkurbel 74 aufnimmt. Die Schraubenkurbel 74 ist verdrehbar in einem Vorsprung 76 gelagert, welcher nach oben gerichtet und an einer quer verlaufenden, vertikalen Platte 78 befestigt ist. Die Platte 78 ist ein Teil der Anbaukonstruktion 24.

Das Hebesystem 30 enthält eine weitere horizontale, quer verlaufende Querwelle 80, welche in den Rahmenträgern 16 und 18 an einer Stelle vor der Querwelle 48 angeordnet ist. Ein Kurbelarm 82, der die Form einer rechteckigen Platte aufweist, liegt an dem linken Ende der Querwelle 80 an und ist mit dieser befestigt. Ein Bewegungsübertragungsglied 83 ist mit seinem hinteren Ende über den Bolzen 68 mit dem Kurbelarm 64 gekoppelt und mit seinem vorderen Ende über den Bolzen 84 mit dem Kurbelarm 82 gekoppelt. Ein stegförmiger Kurbelarm 86 ist an der Welle 80 an der Innenseite des rechten Trägers 16 befestigt, während ein ähnlicher Kurbelarm 87 am rechten Ende der Welle 18 außerhalb des Trägers 16 befestigt ist. Axial gerichtete Verbindungsbohrungen 88 sind in den Kurbelarmen 82 und 86 vorgesehen, um ein Arbeitsgerät an das Hebesystem anzukoppeln, wie es im einzelnen noch beschrieben werden wird. Ein Befestigungsbolzen ist am Ende des Kurbelarmes 87 vorgesehen. Er dient der Befestigung eines Endes einer Gasfeder (siehe unten), die zusätzlich zur Feder 70 das Anheben unterstützt.

Der Traktorrahmen 10 trägt ferner einen nicht dargestellten Traktormotor, welcher eine vertikal ausgerichtete Kurbelwelle aufweist, die ihrerseits an ihrem unteren Ende eine Antriebsscheibe 89 trägt, die in einem vorderen Bereich in der Mitte zwischen den Trägern 16 und 18 in einer Höhe etwas unter dem Boden der Träger 16 und 18 angeordnet ist.

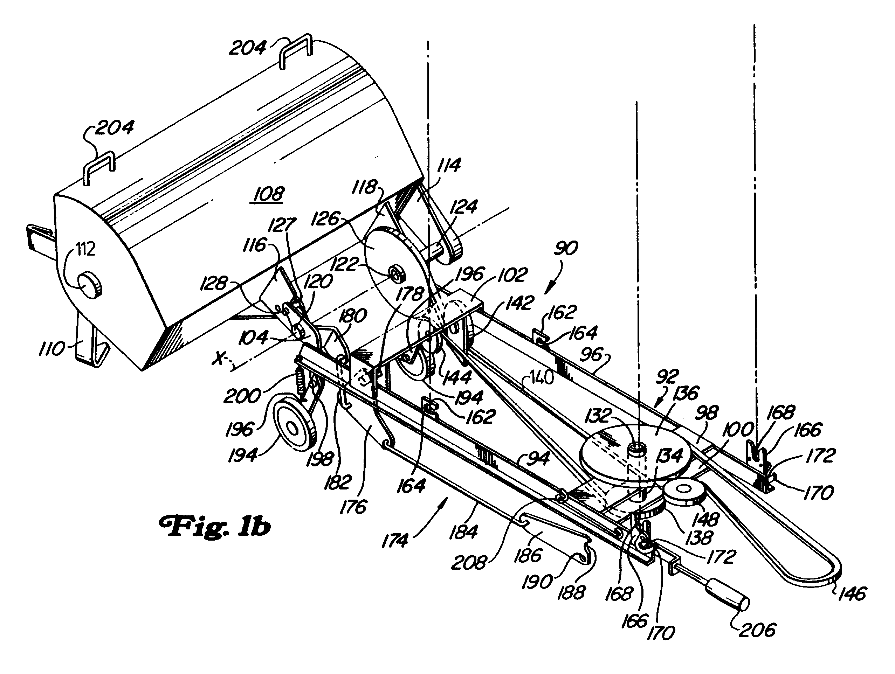

In Fig. 1b ist eine von dem Traktorrahmen 10 getrennte Fräse 90 dargestellt. Senkrechte, strichpunktierte Linien deuten an, wo die Fräse mit dem Traktorrahmen verbunden wird. Insbesondere enthält die Fräse 90 einen Befestigungsrahmen 92, welcher in Querrichtung beabstandete, parallele, längs verlaufende rechte und linke Seitenteile 94 und 96 aufweist, die im Bereich ihrer vorderen Enden durch obere und untere Platten 98 und 100 und im Bereich ihrer hinteren Enden durch eine U-förmige Platte 102 miteinander verbunden sind. Die Platten 98, 100 und 102 sind in ihrem mittleren Bereich im wesentlichen horizontal ausgerichtet, ebenso die Seitenteile 94 und 96. Rechte und linke Stützen 104 (nur die rechte Stütze ist sichtbar) sind jeweils mit einem Ende der Seitenteile 94 und 96 verbunden. Ein Fräsenzinkengehäuse 108, welches eine Zinkenanordnung 110 enthält, ist hinter den Seitenteilen 94 und 96 angeordnet und erstreckt sich quer zu diesen Seitenteilen 94 und 96. Die Zinkenanordnung 110 enthält eine Antriebswelle 112 mit einem nicht dargestellten linken Ende, welches durch die linke Wandung des Gehäuses 108 ragt und einen Kettenkranz trägt. Der linke Wandteil des Gehäuses 108 umfaßt einen Teil 114, der nach vorne übersteht und parallel zu einer rechten und linken Befestigungsplatte 116 und 118 ausgerichtet ist. Die Befestigungsplatten 116 und 118 sind am Gehäuse 108 integriert und drehbar an den Stützen 104 befestigt, wodurch eine horizontale, quer verlaufende X-Achse gebildet wird, um die das Gehäuse 108 vertikal zwischen einer angehobenen Transportposition und einer abgesenkten Fräsposition verschwenkbar ist. Diese X-Achse wird durch einen Drehbolzen 120, der sich durch die rechte Stütze 104 und die Befestigungsplatte 116 erstreckt, und eine Antriebswelle 122, die sich durch die linke Stütze 104 und die Befestigungsplatte 118 erstreckt, definiert. Die Antriebswelle 122 wird durch ein Rohr aufgenommen, dessen gegenüberliegende Enden mit der Befestigungsplatte 118 und dem Teil 114 der Gehäuseendwand verschweißt sind. Eine angetriebene Riemenscheibe 126 wird durch das nach innen gerichtete Ende der Antriebswelle 122 getragen. Ein nicht dargestellter Kettenkranz befindet sich am äußeren Ende der Antriebswelle 122 und fluchtet in Längsrichtung mit dem Kettenkranz der Antriebswelle 112. Eine Antriebskette verbindet die beiden Kettenkränze. Um die Befestigung der Fräse 90 am Traktorrahmen 10 (die noch beschrieben werden wird) zu erleichtern, ist es wünschenswert, daß eine relative Verdrehung zwischen Fräsengehäuse 108 und Befestigungsrahmen 92 vermieden wird. Dies wird dadurch erreicht, daß die obere Kante der Befestigungsplatte 116 mit einer Bolzenaufnahme oder einer Aussparung 127 versehen wird und die rechte Stütze 104 mit einem nach innen gerichteten Verriegelungsbolzen 128 versehen wird. Der Verriegelungsbolzen 128 ist so angeordnet, daß er durch die Aussparung 127 dann aufgenommen wird, wenn das Gehäuse 108 derart angehoben wird, wie es in Fig. 1b und 2 gezeigt ist. Eine Verriegelungslasche 130 ist drehbar an der Platte 116 befestigt und enthält eine Bolzenaufnahme 131, welche so geformt ist, daß sie den Bolzen 128 in der Aussparung 127 festhalten kann, sofern die Verriegelungslasche 130 in die dargestellte Position verdreht wird.

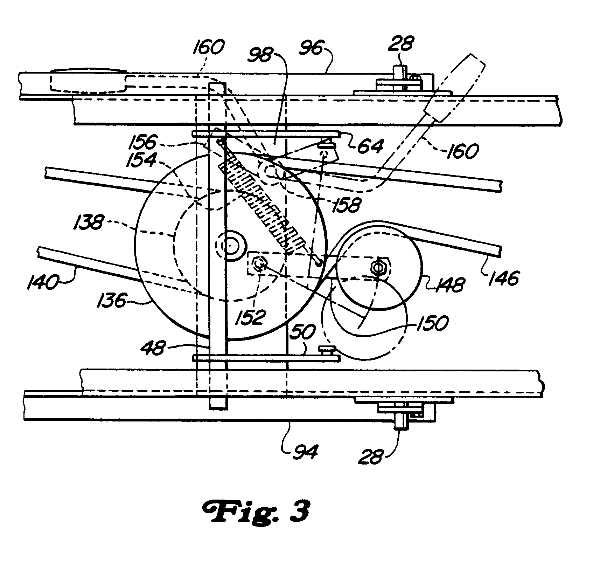

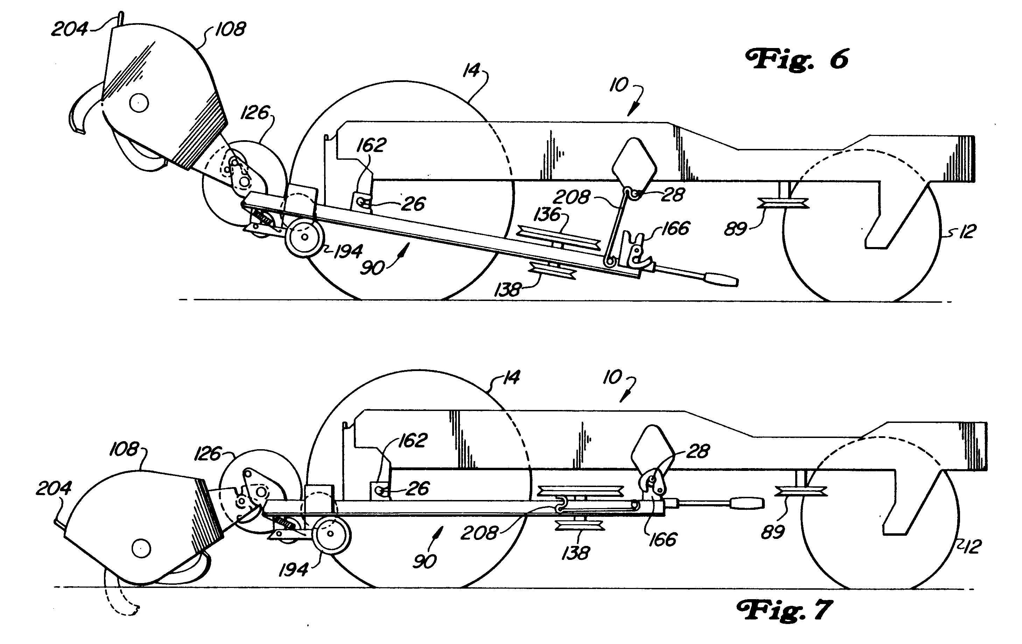

Eine aufrecht ausgerichtete Antriebswelle 132 ist rotierbar in einer Hülse 134 befestigt, welche sich durch den mittleren Bereich der Platten 98 und 100 erstreckt und an diesen befestigt ist. Am oberen und unteren Ende der Antriebswelle 132 ist jeweils eine erste und zweite Antriebsriemenscheibe 136 und 138 befestigt. Ein zweiter Antriebsriemen 140 überträgt die Kraft zwischen der zweiten Antriebsscheibe 138 und der Riemenscheibe 126. Er wird zu diesem Zweck durch die Riemenscheiben 138 und 126 aufgenommen und zum Zwecke einer 90°-Verdrehung durch eine erste und eine zweite Riemenleitrolle 142 und 144, die an dem Befestigungsrahmen 92 befestigt sind und in der Nähe der Riemenscheiben 126 liegen, geführt. Die Riemenleitrollen 142 und 144 rotieren um horizontale Achsen und stehen mit der oberen bzw. der unteren Seite der sich gegenüberliegenden Abschnitte des Antriebsriemens 140 in Eingriff. Ein primärer Antriebsriemen 146 wird durch die Antriebsriemenscheibe 136 aufgenommen und ist so angeordnet, daß er mit der Antriebsscheibe 89 des Traktors dann in Eingriff steht, wenn die Fräse am Traktorrahmen befestigt ist, wie es in Fig. 7 dargestellt wurde. Wie es aus Fig. 3 am besten ersichtlich ist, wird eine Riemenleitrolle 148 durch einen Leitrollenarm 150 getragen, welcher in einem mittleren Bereich der oberen Platte 98 durch einen Drehbolzen 152 drehbar befestigt ist. Das erste Ende einer Zugfeder 154 ist mit dem Leitrollenarm 150 befestigt. Das zweite Ende der Feder 154 ist mit einem Entspannungshebel 156 befestigt, welcher seinerseits in dem Punkt 158 drehbar mit dem linken Bereich der unteren Platte 100 befestigt ist und einen Handhebel 160 enthält.

Die Fräse 90 enthält Mittel, mittels derer sie an den Traktorrahmen 10 und an das Hebesystem 30 ankoppelbar ist. Insbesondere ist ein Paar hinterer Verbindungsstützen 162 mit den Rahmenseitenteilen 94 und 96 an einer Stelle verbunden, die vor der U-förmigen Platte 102 liegt. Die Verbindungsstützen 162 ragen nach oben über die Seitenteile 94 und 96 heraus. Die Verbindungsstützen 162 enthalten nach vorne geöffnete Aufnahmeaussparungen 164, die für die Aufnahme des hinteren Paares der Anbaugerätbefestigungsbolzen 26 angepaßt sind. Ein Paar vorderer Verbindungsstützen 166 ist an der äußeren Fläche im vorderen Bereich der Rahmenseitenteile 94 und 96 befestigt und ragt nach oben über die Seitenteile 94 und 96 hinaus. Die Verbindungsstützen 166 enthalten nach oben geöffnete Aufnahmeaussparungen 168, welche für die Aufnahme des Paares vorderer Arbeitsgerätbefestigungsbolzen 28 angepaßt sind. Ein Paar von Verriegelungsteilen bzw. Laschen 170 ist nach oben verdrehbar an den Verbindungsstützen 166 befestigt. Sie enthalten Aussparungen, die so geformt sind, daß sie über die Bolzen 28 derart verschwenkbar sind, daß sie die Bolzen in den Aussparungen 168 der Verbindungsstützen 166 festhalten bzw. freigeben.

Auf der Fräse 90 ist ein Hubgestänge 174 vorgesehen, das der Übertragung der Bewegung des Hebegriffes 44 auf das Fräsengehäuse 108 dient, so daß wahlweise das Fräsengehäuse 108 um die X-Achse verstellbar ist, wenn die Fräse 90 auf dem Traktorrahmen 10 befestigt wird, was weiter unten noch beschrieben werden wird. Das Hubgestänge 174 beinhaltet einen in etwa dreieckförmigen Kniehebel 176, der um einen an seiner oberen Ecke befindlichen horizontal ausgerichteten Bolzen 178 verschwenkbar ist. Der Kniehebel 176 befindet sich an der rechten Seite der U-förmigen Platte 102. Eine nach hinten gewandte Ecke des Kniehebels 176 ist mit einem nach vorne gerichteten Ausleger 180, welcher an der rechten Befestigungsplatte 116 befestigt ist, mittels eines Gliedes 182 verbunden. Das Glied 182 ist stabförmig ausgebildet. Seine beiden Enden sind abgewinkelt und verlaufen quer zur Längsrichtung des Fräsenrahmens. Die Enden werden durch Löcher in dem Kniehebel 176 und in dem Ausleger 180 aufgenommen. Die Enden eines stabförmigen Bewegungsübertragungsgliedes 184 sind ebenfalls abgebogen und verlaufen quer zum Fräsenrahmen. Das hintere Ende wird durch ein Loch aufgenommen, welches sich in einer vorderen Ecke des Kniehebels 176 befindet. Das vordere Ende ist drehbar in einem ersten Endbereich eines Hebels 186 gelagert. Der Hebel 186 trägt an seinem zweiten Endbereich einen bogenförmigen Ansatz 188 und daneben ein Montageloch 190. Anhand der Fig. 2 ist erkennbar, daß dann, wenn die Fräse 90 auf dem Fahrzeugrahmen 10 befestigt ist, der Ansatz 188 des Hebels 186 die Querwelle 48 umfaßt, während das Loch 190 einen Bolzen 192 aufnimmt, welcher am Kurbelarm 64 befestigt ist.

Um das Gewicht der Fräse 90 bei der Montage bzw. Demontage am Traktorrahmen 10 aufzunehmen, sind rechte und linke Transporträder 194 an einem Ende eines Paares von Radhaltearmen 196 befestigt. Das Paar von Armen 196 ist in vertikaler Richtung um ein Paar von Drehzapfen 198, von denen nur einer sichtbar ist und die an jeweils einem nach unten überstehenden Ende der Stützen 104 und 106 angeordnet sind, befestigt. Jeweils das erste Ende eines Paares von Sprungfedern 200 ist mit einem der Arme 196 gekoppelt, während das jeweils andere Ende der Federn 200 mit dem hinteren Ende des Rahmenseitenteils 94 und 96 verbunden ist. Die Federn 200 sind bezüglich der Drehzapfen 198 so angeordnet, daß dann, wenn die Räder 194 sich in ihrer abgesenkten Transportposition, wie in Fig. 1b dargestellt, befinden, die Federn 200 die Arme 196 im Uhrzeigersinn vorspannen und die oberen Enden der Arme 196 in den Eingriffsbereich eines Paares von Anschlagbolzen 202 (von denen nur einer sichtbar ist) bringen. Die Anschlagbolzen 202 sind an den Stützen 104 und 106 befestigt und stehen nach innen über. Die Arme 196 sind entgegen dem Uhrzeigersinn von den Anschlagbolzen 202 weg verschwenkbar, so daß die Räder 194 in eine angehobene Verwahrstellung gebracht werden, wie es Fig. 2 zeigt. Diese Bewegung der Arme 196 erfolgt dann, wenn die Feder 200 über die Achslage des Drehzapfens 198 hinweg bewegt wird. Die Federn 200 halten dann die Räder 194 in ihrer Verwahrposition.

Die Lage der Räder 194 auf der Fräse 90 ist so ausgewählt, daß sich das Zentrum der Schwerkraft der Fräse in etwa in der gleichen vertikalen Ebene befindet wie die Räder 194, wenn sie sich in ihrer abgesenkten Transportposition befinden. Dies ermöglicht es, daß eine Person die Fräse 90 um die Stützräder leicht verschwenken kann, indem sie ein Paar von Handgriffen 204, die am Klinkengehäuse 108 befestigt sind, anhebt bzw. herunterdrückt oder indem sie einen Arm oder einen Haltegriff 206, welcher nach vorne über das rechte Rahmenseitenteil 94 übersteht, anhebt oder herunterdrückt. Am vorderen Ende des Seitenteils 94 ist ferner eine Abstützstange 208 befestigt, durch die die Montage der Fräse 90 auf dem Traktorrahmen 10 erleichtert wird. Ein Ende der Abstützstange 208 ist als Auge ausgebildet, welches einen quer verlaufenden Drehbolzen 210 umschließt. Das zweite Ende der Abstützstange 208 läuft U-förmig aus und bildet eine Aufnahme 212, die dann, wenn die Abstützstange 208 aufgerichtet ist, den rechten Arbeitsgerätbefestigungsbolzen 28 aufnimmt (Fig. 6), nachdem das Paar hinterer Verbindungsstützen 162 das Paar hinterer Arbeitsgerätbefestigungsbolzen 26 aufgenommen hat und der Handgriff 206 heruntergedrückt ist, um den Befestigungsrahmen 92 um die Bolzen 26 zu verdrehen, wodurch die Räder 94 vom Boden abgehoben werden, wie es Fig. 6 zeigt.

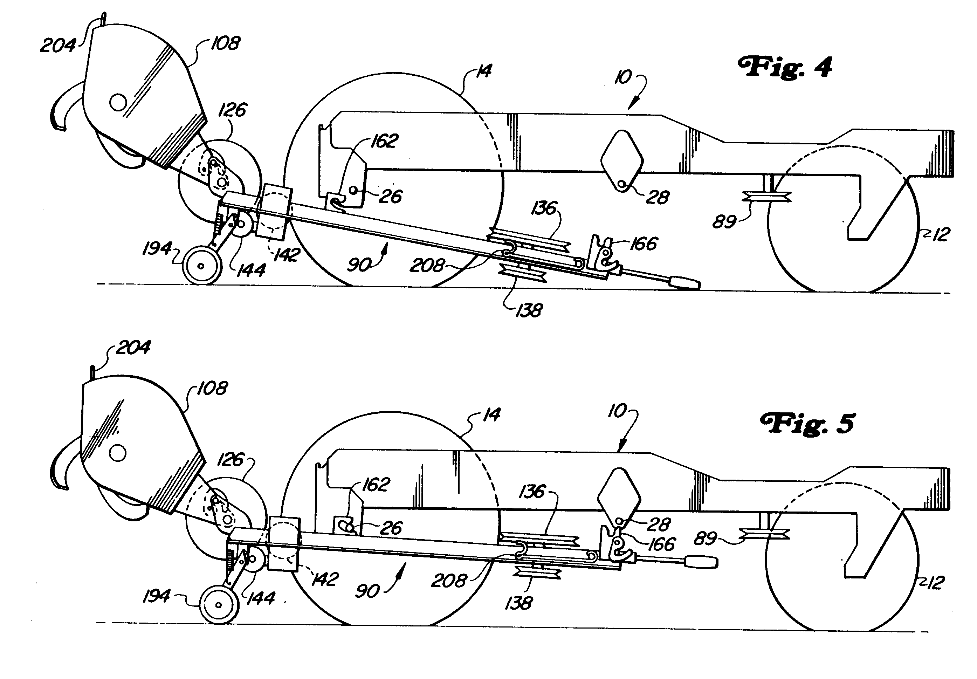

Bei der Montage der Fräse 90 auf dem Traktorrahmen 10 ergreift eine Bedienungsperson die Handgriffe 204 und manövriert die Fräse auf ihren Rädern 194 so, daß das Gehäuse 108 hinter dem Traktorrahmen 10 liegt und der Fräsenrahmen 92 zwischen den Hinterrädern 14 des Traktors unterhalb des Traktorrahmens hindurchgreift, wie es die Figuren 4 und 5 zeigen. Nachdem die Bedienungsperson sich versichert hat, daß das Paar hinterer Verbindungsstützen 162 in einer Linie mit dem Paar hinterer Arbeitsgerätbefestigungsbolzen 26 liegt, rollt sie die Fräse 90 nach vorne, bis die Bolzen 26 in die Aufnahmeaussparungen 164 eingreifen, wie es Fig. 6 zeigt. Die Bedienungsperson geht dann zu dem vorderen Ende der Fräse und drückt den Haltegriff 206 herunter, so daß sich die Räder 194 vom Boden abheben. Dann wird die Abstützstange 208 so weit angehoben, daß ihre Aufnahme 212 unter dem rechten Arbeitsgerätbefestigungsbolzen 28 liegt. Dann wird der Haltegriff 206 losgelassen, so daß infolge des hinter den hinteren Befestigungsbolzen liegenden Gewichtes der Fräse die Aufnahme 212 in die Bolzen 28 eingreift. Die Bedienungsperson kehrt dann an das hintere Ende des Traktorrahmens zurück und verschwenkt die Transporträder 194 in ihre angehobene Aufbewahrungsposition, wie es beispielsweise in den Figuren 2 und 7 gezeigt ist. Die Bedienungsperson kehrt dann wieder an das vordere Ende des Fräsenrahmens 92 zurück und drückt den Haltegriff 206 herunter, um die Abstützstange 208 zu lösen und es dem vorderen Ende des Fräsenrahmens 92 zu ermöglichen, nach oben zu kippen, so daß die Aufnahmeaussparungen 168 des Paares der vorderen Verbindungsstützen 166 mit dem Paar der vorderen Arbeitsgerätbefestigungsbolzen 28 in Eingriff gebracht werden. Dann wird das Paar der Verriegelungslaschen 170 in eine Lage verdreht, in der sie die Verbindung zwischen dem vorderen Ende des Fräsenrahmens 92 und dem Traktorrahmen 10 sichern. Dann wird der primäre Antriebsriemen 146 auf die Antriebsscheibe 89 aufgelegt und durch Betätigung des Leitrollenarmes 150 anhand des Hebels 160 richtig gespannt. Dann wird das zweite Hubgestänge 174 mit dem Traktorhebesystem 30 gekoppelt, indem der Hebel 186 in den Bolzen 192 eingehängt und der Ansatz 188 mit der Welle 48 in Eingriff gebracht wird.

Zu dieser Zeit ist die hubunterstützende Feder 70 des Traktorhebesystems 30 normalerweise nicht gespannt, und die Bedienungsperson spannt die Feder 70, indem sie die Schraubenkurbel 74 in der entsprechenden Richtung verdreht. Die Verriegelungslaschen 130, durch die das Fräsengehäuse 108 starr mit dem Fräsenrahmen 92 verbunden ist, werden dann gelöst, wodurch es möglich ist, das Gehäuse um die X-Achse durch Betätigung des Hebegriffes 44 zu verstellen. Die Fräse 90 ist nun betriebsbereit.

Die oben dargestellte Vorgehensweise für die Montage der Fräse 90 auf dem Traktorrahmen 10 muß lediglich in umgekehrter Reihenfolge erfolgen, um die Fräse von dem Traktorrahmen zu lösen.

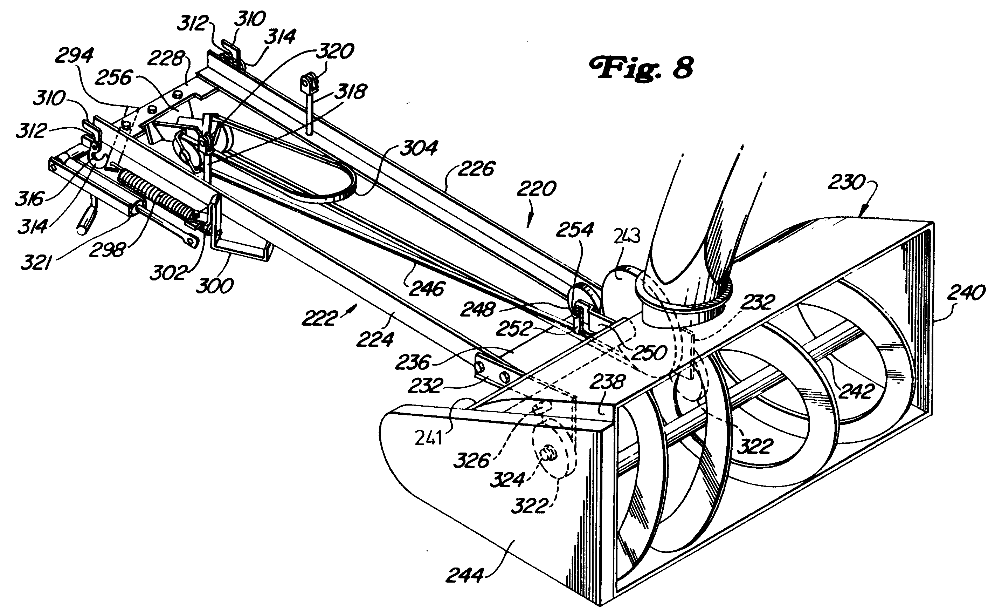

Fig. 8 zeigt ein frontmontierbares, antreibbares Arbeitsgerät, insbesondere eine Schneeschleuder, das in einer Lage dargestellt ist, aus der es rückwärts zwischen die Vorderräder 12 des Traktors gerollt werden kann, um mit dem Traktorrahmen 10 verbunden zu werden. Die Schneeschleuder 220 enthält insbesondere einen Befestigungsrahmen 222, welcher ein rechtes und ein linkes Seitenteil 224 und 226 aufweist. Die Seitenteile 224 und 226 sind an ihrem hinteren Ende durch ein Querteil 228 miteinander verbunden. An ihrem vorderen Ende sind sie miteinander durch eine Struktur verbunden, welche den unteren, hinteren Teil eines Rotorgehäuses 230 bildet. Diese Struktur enthält ein Paar rückwärts gerichteter Stege 232, welche an den Rahmenseitenteilen befestigt sind. Eine Platte 236 ist unten an die Stege 232 angeschweißt. Hierdurch werden zusätzliche Spannungen aufgenommen, und die Platte 236 schirmt die Antriebskomponenten, die darüber angeordnet sind, ab, was noch beschrieben werden wird. Das Rotorgehäuse 230 weist eine rechte und eine linke Endwandung 238 und 240 auf, in denen die gegenüberliegenden Enden einer Drehwelle 242 drehbar gelagert sind. Das rechte Ende der Welle 242 ragt durch die rechte Endwand 238 hindurch und trägt einen nicht dargestellten Kettenkranz. An der Rückseite des Gehäuses 230 ist über ein nicht dargestelltes Paar quer beabstandeter Stützen ein horizontal und quer verlaufendes Rohr 241 befestigt, welches eine nicht sichtbare Zwischenwelle mit einem nicht sichtbaren Zahnkranz aufnimmt. Der Zahnkranz ist an dem rechten Ende der Zwischenwelle befestigt, während an dem linken Ende der Zwischenwelle eine angetriebene Keilriemenscheibe 243 befestigt ist. Eine nicht sichtbare Antriebskette ist in einem Gehäuse 244 an dem rechten Ende des Rotorgehäuses 230 untergebracht und steht mit den Kettenkränzen, die durch die Zwischenantriebswelle und die Drehwelle 242 getragen werden, in Eingriff. Ein Antriebsriemen 246 wird durch die Riemenscheibe 243 und eine Riemenleitrolle 248 aufgenommen. Die Riemenleitrolle wird durch einen Arm 250 getragen, welcher an dem Rohr 241 benachbart zur inneren Fläche der Riemenscheibe 243 angeordnet ist. Die Riemenleitrolle 248 ist benachbart zu einem hinteren, peripheren Teil der Riemenscheibe 243 und steht mit der oberen Umschlingung des Antriebsriemens 246 in Eingriff. Eine Riemenführung 252 wird durch einen Bolzen 254 getragen, welcher sich durch den Arm 250 erstreckt und gleichzeitig eine Rotationsachse für die Riemenleitrolle 248 bildet.

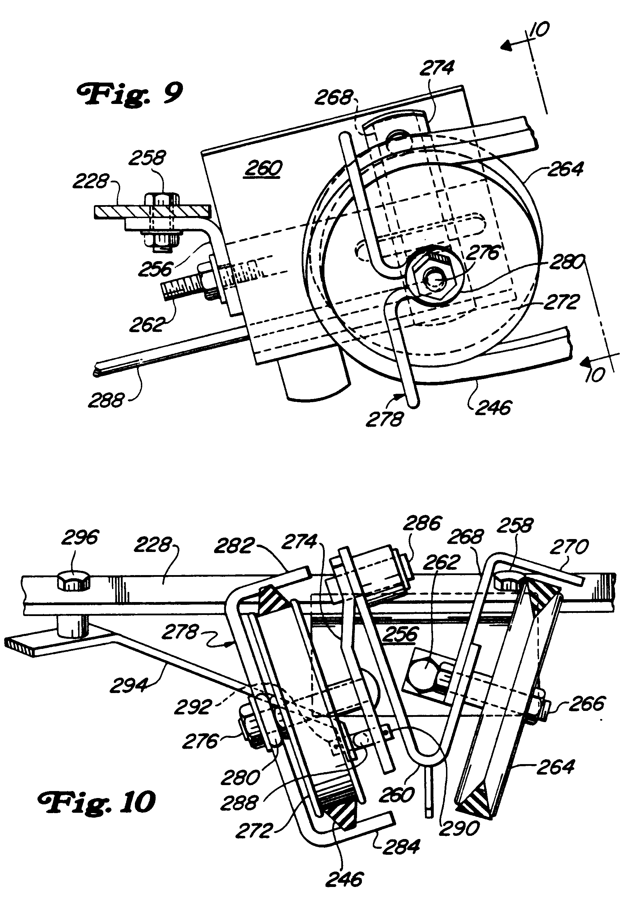

In den Figuren 9 und 10 ist ein L-förmiges Winkelteil 256 erkennbar, welches an dem Querteil 228 des Schneeschleuderbefestigungsrahmens 222 durch ein Paar von Bolzen 258 befestigt ist. Ein V-förmiger Riemenleitrollenträger 260 ist an dem Winkelteil 256 durch einen sich in Längsrichtung erstreckenden Riemenspannungsnachstellbolzen 262 befestigt. Eine rechte Riemenleitrolle 264 ist an dem Träger 260 durch einen Bolzen 266, der zusätzlich einen Riemenhaltebügel 268 in Position hält, befestigt. Der Riemenhaltebügel 268 ist als L-förmige Lasche dargestellt, dessen eines Ende 270 sich über die Riemenleitrolle 264 erstreckt. Eine linke Riemenleitrolle 272 ist an einer zentralen Position eines Hebels 274 durch einen Bolzen 276 befestigt. Der Bolzen 276 dient zusätzlich zur Sicherung eines Riemenhaltebügels 278 in seiner Lage. Der Riemenhaltebügel 278 ist stabförmig ausgebildet und weist in seinem mittleren Bereich einen Umschlingungsbereich 280 auf, der den Bolzen 276 aufnimmt. Der obere und untere Endbereich 282 und 284 liegt jeweils über bzw. unter der Riemenleitrolle 264. Ein oberes Ende des Hebels 274 ist drehbar mit einem oberen Ende eines der Beine des Trägers 260 durch einen Bolzen 286 verbunden. Ein Riemenspannungseinstellgestänge enthält eine Stange 288 mit einem nach innen gedrehten, vorwärts weisenden Ende 290, welches in eine Bohrung eingreift, die sich an dem unteren Ende des Hebels 274 befindet. Ferner enthält die Stange 288 ein nach außen gedrehtes, rückwärts weisendes Ende 292, das durch eine Bohrung aufgenommen wird, die sich in einem inneren Ende des Hebels 294 befindet. Der Hebel 294 ist mit dem Querteil 228 über einen aufrechtstehenden Bolzen 296 drehbar befestigt. Ein äußeres Ende des Hebels 294 erstreckt sich über das rechte Rahmenteil 224 hinaus und ist mit dem hinteren Ende einer Sprungfeder 298 verbunden. Das vordere Ende der Sprungfeder 298 ist mit einem Betätigungshebel 300 gekoppelt, welcher sich an einem aufrechten Bolzen 302 abstützt. Der Riemen ist auf der Strecke zwischen der aufrechtstehenden Riemenscheibe 243 und der Riemenleitrolle 248 einerseits und den weiter hinten liegenden Riemenleitrollen 264 und 272 um 90° verdreht. Zwischen den Riemenleitrollen 264 und 272 bildet der Riemen einen sich nach vorne erstreckenden Bereich 304, der sich an die Antriebsriemenscheibe 89 des Traktors anpassen läßt. Die Riemenhaltebügel 268 und 278 halten den Riemen 246 in seiner Lage, wenn die Schneeschleuder 220 von dem Traktorrahmen 10 wie dargestellt gelöst ist. Hierdurch wird der Riemen 246 sauber gehalten, so daß er sich später bei der Montage der Schneeschleuder 220 auf dem Traktorrahmen 10 wieder problemlos befestigen läßt. Auf diese Weise verhindern die Haltebügel, daß der Riemen 246 unbeabsichtigt über die Leitrolle in einer Weise gezogen wird, welche dazu führt, daß das Schneeschleuderleitrad in umgekehrter Richtung angetrieben wird.

Der Schneeschleuderrahmen 222 trägt ein Paar von Befestigungsstützen 310, die an dem hinteren Ende der Rahmenseitenteile 224 und 226 befestigt sind und nach hinten offene Aussparungen 312 enthalten. Die Aussparungen 312 sind für die Aufnahme der Traktorrahmenbefestigungsbolzen 28 angepaßt. An den Befestigungsstützen 310 sind Laschen 314 drehbar befestigt, welche Aufnahmen 316 für den wahlweisen Eingriff mit den Bolzen 28 enthalten, wodurch diese in den Aussparungen 312 der Befestigungsstützen 310 gehalten werden. Um eine Verbindung zwischen Schneeschleuderrahmen 222 und dem Traktorhebesystem 30 auf die Weise herzustellen, daß letzteres so betrieben werden kann, daß der Schneeschleuderrahmen 222 um eine Drehachse, die durch die Bolzen 28 definiert wird, kippbar ist, ist ein Paar von Lagerungs- bzw. Hebestangen 318 vorgesehen, welche nach oben über die Rahmenseitenteile 224 und 226 hinausragen, und zwar an einer Stelle, die vor dem hinteren Ende der Seitenteile 224 und 226 liegt. Die oberen Enden der Stangen 318 tragen Gabelköpfe 320, die derart ausgebildet sind, daß sie eine Verbindung mit den Kurbelarmen 82 und 86 zulassen, indem Bolzen durch Löcher in den Gabelköpfen 320 und die Löcher 88, die sich in den Kurbelarmen 82 und 86 befinden, gesteckt werden. Am hinteren rechten Ende des Schneeschleuderrahmens 222 ragt ein Bolzen hervor, welcher einen verschwenkbaren Träger für das Zylinderende einer Gasfeder 321 trägt. Die Gasfeder 321 ist für eine Verbindung mit dem Kurbelarm 87 des Traktorhubsystems 30 angepaßt. Die Gasfeder 321 dient der Unterstützung der hubunterstützenden Feder 70.

Ein Paar von Transporträdern 322 ist mittels Bolzen 324 an den Teilen 232 so befestigt, daß sie in der Nähe des Rotorgehäuses 230 liegen. Die Räder 322 sind an einer Stelle nahe einer quer verlaufenden, vertikalen Ebene angeordnet, welche durch das Zentrum der Gravitationskraft der Schneeschleuder 220 festgelegt ist. Auf diese Weise kann eine Bedienungsperson, die die Schneeschleuder 220 an dem Traktorrahmen 10 befestigt, die Schneeschleuder um die Räder leicht verkippen und sie mittels der Räder während ihrer Montage bzw. Demontage an dem Traktorrahmen manövrieren. Durch Bolzen 326 lassen sich die Räder 322 in eine Lage festlegen, die während des Betriebes der Schneeschleuder nicht stört.

Die Montage der Schneeschleuder 220 an dem Traktorrahmen 10 erfolgt in ähnlicher Weise, wie sie oben bei der Beschreibung der Montage der Fräse an dem Traktorrahmen 10 dargestellt wurde. Es ist lediglich zu beachten, daß die Schneeschleuder so montiert wird, daß ihre Arbeitsteile vor dem Traktor angeordnet sind. Insbesondere wird die Montage der Schneeschleuder 220 an dem Traktorrahmen 10 durchgeführt, indem der Traktor auf einer relativ harten, flachen Oberfläche abgestellt wird. Das Schneeschleuderrotorgehäuse 230 wird an einer vorderen, oberen Stelle ergriffen, und die Schneeschleuder wird auf ihren Transporträdern 322 so manövriert, daß der Schneeschleuderrahmen 222 zwischen die Traktorräder 12 eingreift, wobei die Aussparungen 312 der Befestigungsstützen 310 die Befestigungsbolzen 28 des Traktorrahmens aufnehmen. Die Befestigungslaschen 314 werden dann verschwenkt, um die Stützen 310 mit den Bolzen 28 zu verriegeln. Als nächstes werden die Hebestangen 318 mit den Kurbelarmen 82 und 86 verbunden, und die Entlastungs- bzw. Hubunterstützungsfeder 321 wird an dem Kurbelarm 87 befestigt. Dann wird die Feder 70 durch Betätigung der Schraubenkurbel 74 gespannt. Der Hebegriff 44 wird dann betätigt, um die Schneeschleuderräder 322 anzuheben, wonach die Räder 322 abgenommen und auf den Stiften 326 montiert werden können. Dann wird der Antriebsriemenbereich 304 mit der Antriebsscheibe 89 des Traktors in Eingriff gebracht, und der Riemenspannungseinstellhebel 300 wird betätigt, um die Riemenleitrolle 272 so zu bewegen, daß eine zuverlässige Spannung des Antriebsriemens 246 für den Betrieb vorliegt.

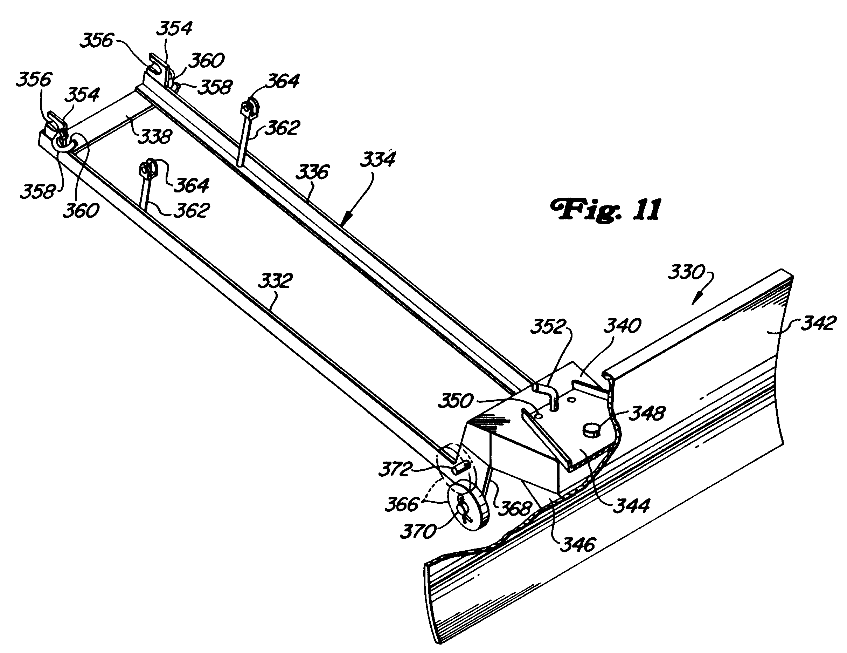

Fig. 11 zeigt ein nicht angetriebenes Arbeitsgerät in Form eines Planierschildeinsatzes 330 mit einem Rahmen 334, welcher rechte und linke, längs verlaufende Seitenteile 332 und 336 aufweist. Die Seitenteile 332 und 336 sind an ihrem hinteren Ende durch ein Querteil 338 und an ihrem vorderen Ende durch einen Schildbefestigungsaufbau 340 miteinander verbunden. Ein Planierschild 342 trägt an seiner Hinterseite eine Befestigungsstütze, welche durch eine obere und eine untere Befestigungsplatte 344 und 346 gebildet wird. Die Befestigungsplatten 344 und 346 sind parallel beabstandet angeordnet und nehmen zwischen sich den Schildbefestigungsaufbau 340 auf. Die Kopplung zwischen den Teilen erfolgt durch einen aufrecht ausgerichteten, drehbaren Bolzen 348. Löcher 350 zur Einstellung des Schildwinkels sind auf den Platten 344 und 346 bogenförmig um den drehbaren Bolzen 348 angeordnet. Ein Verriegelungsbolzen 352 ist vorgesehen, um das Schild 342 in einer gewünschten Position zu sichern. Um den Schildrahmen 334 an dem Traktorrahmen 10 befestigen zu können, ist ein Paar von Befestigungslaschen 354 vorgesehen, welche am hinteren Ende der Seitenteile 332 und 336 befestigt sind und nach hinten offene Aussparungen 356 enthalten, die für die Aufnahme der Traktorrahmenbefestigungsbolzen 28 angepaßt sind. Ein Paar von Verriegelungsteilen 358 ist verschwenkbar an den Befestigungslaschen 354 befestigt. Sie enthalten Ausnehmungen 360, die für den wahlweisen Eingriff der Bolzen 28 angepaßt sind, um die Befestigung des Rahmens 334 am Traktorrahmen 10 zu sichern. Ein Stück vor den Befestigungslaschen 354 ist an den Seitenteilen 332 und 336 ein Paar von Abstütz-bzw. Hebestangen 362 angeordnet, die nach oben über die Seitenteile 332 und 336 hinausragen und an ihrem oberen Ende Gabelköpfe 364 tragen. Die Gabelköpfe 364 sind so ausgebildet, daß sie einen Bolzen zur Sicherung der Hebestangen 362 mit den Kurbelarmen 82 und 86 des Traktorhebesystems 30 aufweisen.

Zur Unterstützung der Montage der Planierschildanordnung 330 am Traktorrahmen 10 ist ein Paar von Transportrollen 366 vorgesehen. Diese sind an Beinen 368 befestigt, die den Aufbau 340 über Bolzen 370 abstützen. Die Räder 366 sind so angeordnet, daß sie in oder nahe einer vertikalen, quer verlaufenden Ebene liegen, die durch das Zentrum der Gravitationskraft des Planierschildeinsatzes 330 definiert ist. Auf diese Weise macht die Lage der Räder 366 es einer Bedienungsperson leicht, den Planierschildeinsatz 330 um die Räder 366 zu verkippen und den Planierschildeinsatz 330 in eine Position zu manövrieren, in der er sich an einem Fahrzeugrahmen 10 montieren bzw. demontieren läßt. Die Räder 366 können entfernt werden und an einem Paar von Aufbewahrungsbolzen 372 wieder befestigt werden. Die Aufbewahrungsbolzen 372 befinden sich oberhalb der Bolzen 370 und sorgen dafür, daß die Räder 366 den Boden nicht berühren, wenn der Planierschildeinsatz 330 in Betrieb genommen wird.

Die Montage des Planierschildeinsatzes 330 am Traktorrahmen 10 erfolgt auf die Weise, daß die obere Kante des Schildes 342 ergriffen wird und der Planierschildeinsatz 330 um die Räder 366 verschwenkt wird. Der Planierschildeinsatz 330 läßt sich nun zwischen die Traktorräder 12 manövrieren, bis die Befestigungslaschen 354 mit den Traktorrahmenbefestigungsbolzen 28 in Eingriff gebracht sind. Die Verriegelungslaschen 358 werden dann so verdreht, daß sie in Eingriff mit den Bolzen 28 gebracht werden, um so das hintere Ende des Schildrahmens 334 zu verriegeln. Die Stütz- oder Hebestangen 362 werden dann mit dem Traktorhebesystem 30 verbunden, indem Bolzen durch die Gabelköpfe 364 und die Kurbelarme 82 und 86 gesteckt werden. Alsdann wird die Entlastungsfeder 70 gespannt, indem die Schraubenkurbel 74 verdreht wird. Der Hebegriff 44 wird betätigt, um den Planierschildeinsatz 330 über die Bolzen 28 anzuheben. Die Räder 366 sind nun von dem Untergrund abgehoben und können leicht entfernt und auf den Aufbewahrbolzen 372 gelagert werden, falls dies gewünscht wird.

Es ist ersichtlich, daß die Fräse 90, die Schneeschleuder 220 und der Planierschildeinsatz 330 die Gemeinsamkeit aufweisen, daß sie Transporträder an einem Geräterahmen enthalten, welche sich an einer Stelle befinden, die nahe genug am Zentrum der Gravitationskraft des Arbeitsgerätes liegt. Hierdurch kann das Arbeitsgerät, wenn es von dem Traktorrahmen gelöst ist, leicht verkippt werden, so daß es durch die Transporträder getragen und manövriert werden kann. Dies erleichtert die Verbindung des Arbeitsgeräterahmens mit dem Traktorrahmen.

## Patentansprüche

1. Rasen- oder Gartentraktor mit anbaubarem Anbaugerät, wobei der Traktor einen Traktorrahmen (10), der durch Paare von Vorderrädern (12) und Hinterrädern (14) getragen wird, und das Anbaugerät einen länglichen Anbaugeräterahmen (92, 222, 334), an dem Arbeitswerkzeuge (110, 230, 342) befestigt sind, aufweist und der Traktorrahmen (10) sowie der Anbaugeräterahmen (92, 222, 334) jeweils wenigsten zwei in Fahrtrichtung hintereinander angeordnete Paare quer zur Fahrtrichtung miteinander fluchtender Befestigungsmittel enthalten, die dem Anbauen des Anbaugeräterahmens (92, 222, 334) an dem Traktorrahmen (10) dienen, wobei wenigstens ein Paar der Befestigungsmittel sich quer zur Fahrtrichtung erstreckende, an dem Traktorrahmen (10) befestigte Zapfen (26, 28) sind, die von gabelfömigen Aussparungen (164, 168; 312; 356) des Anbaugeräterahmens (92, 222, 334) aufgenommen werden, dadurch gekennzeichnet, daß an dem Anbaugeräterahmen (92, 222, 334) Transporträder (194, 322, 366) befestigt sind, die zwischen den Befestigungsmitteln - (164, 168; 312; 356) einerseits und den Arbeitswerkzeugen (110, 230, 342) andererseits und in der Nähe einer vertikalen, quer zur Fahrtrichtung und durch den Schwerpunkt des Anbaugerätes verlaufenden Ebene liegen, so daß sich bei angebautem Anbaugerät ein Teil des Anbaugeräterahmens (92, 222, 334) unter den Traktorrahmen (10) in einen Bereich zwischen den Vorderrädern (12) und den Hinterrädern (14) erstreckt, während sich die Arbeitswerkzeuge (110, 230, 342) außerhalb dieses Bereiches befinden, und daß sich das Anbaugerät zum vertikalen Annähern wenigstens eines Paares der Befestigungsmittel (26, 164; 28, 312; 28, 356) um die Achse der Transporträder (194, 322, 366) verschwenken läßt.

2. Rasen- oder Gartentraktor nach Anspruch 1, dadurch gekennzeichnet, daß die Befestigungsmittel (26, 28) des Traktorrahmens (10) und die Befestigungsmittel (162, 166; 310, 320; 354, 364) des Anbaugeräterahmens (92, 222, 334) relativ zueinander eine solche Lage einnehmen, daß der Anbaugeräterahmen (92, 222, 334) wenigstens teilweise zwischen den Vorderrädern (12) bzw. den Hinterrädern (14) unterhalb des Traktorrahmens (10) befestigbar ist.

3. Rasen- oder Gartentraktor nach Anspruch 1 oder 2, dadurch gekennzeichnet, daß der Traktorrahmen (10) quer zur Fahrtrichtung verlaufende, zapfenförmige Befestigungsmittel (26, 28) trägt und daß am Anbaugeräterahmen (92, 222, 334) konsolenförmige Befestigungsmittel (162, 166; 310; 354) angeordnet sind, welche zur Aufnahme der zapfenförmigen Befestigungsmittel (26, 28) des Traktorrahmens (10) geeignet sind.

4. Rasen- oder Gartentraktor nach einem der Ansprüche 1 bis 3, dadurch gekennzeichnet, daß der Traktorrahmen (10) als Befestigungsmittel quer zur Fahrtrichtung verlaufende Verbindungsbohrungen (88) aufweist und der Anbaugeräterahmen (222, 334) als Befestigungsmittel gabelkopfförmige Aufnahmen (320, 364) mit quer zur Fahrtrichtung verlaufenden Bohrungen trägt, wobei eine Verbindung der Traktorbefestigungsmittel und der Anbaubefestigungsmittel mittels durch die korrespondierenden Bohrungen steckbarer Bolzen erfolgt.

5. Rasen- oder Gartentraktor nach einem der Ansprüche 1 bis 4, dadurch gekennzeichnet, daß das Anbauwerkzeug (230, 342) am vorderen Ende des Anbaugeräterahmens (222, 334) befestigbar ist und daß die wenigstens zwei Befestigungsmittel (28, 88) des Traktorrahmens (10) in Fahrtrichtung hintereinander und zwischen den Paaren der Vorderräder (12) und Hinterräder (14) angeordnet sind.

6. Rasen- oder Gartentraktor nach Anspruch 5, dadurch gekennzeichnet, daß die Befestigungsmittel des Anbaugeräterahmens (222, 334) ein Paar quer beabstandeter Konsolen (310, 354) aufweisen, die am hinteren Ende des Anbaugeräterahmens (222, 334) befestigt sind und nach hinten offene Aussparungen (312, 356) zur Aufnahme der zapfenförmigen Befestigungsmittel (28) des Traktorrahmens (10) enthalten.

7. Rasen- oder Gartentraktor nach Anspruch 5 oder 6, dadurch gekennzeichnet, daß die zapfenförmigen Befestigungsmittel (28) eine horizontale Drehachse bilden, um die der Arbeitsgeräterahmen (222, 334) verschwenkbar ist, und daß der Traktor am Rahmen (10) befestigte, handbedienbare Anhebemittel (44) enthält, welche mit einer Stelle des Arbeitsgeräterahmens (222, 334), die vor den Befestigungsmitteln (28) liegt, verbindbar sind, um den Arbeitsgeräterahmen (222, 334) anheben bzw. absenken zu können und damit die Höhe des Arbeitswerkzeuges (230, 342) einzustellen.

8. Rasen- oder Gartentraktor nach einem der Ansprüche 5 bis 7, dadurch gekennzeichnet, daß der Arbeitsgeräterahmen (222, 334) rechte und linke in Längsrichtung verlaufende Seitenteile (224, 226; 332, 336) enthält, die an ihren hinteren Enden durch ein Querteil (228, 338) miteinander verbunden sind, und daß ein Paar quer beabstandeter Konsolen (310, 354) am hinteren Ende der Rahmenkonstruktion angeordnet ist.

9. Rasen- oder Gartentraktor nach einem der Ansprüche 5 bis 8, dadurch gekennzeichnet, daß die Transportmittel (322, 366) in der Nähe des Arbeitswerkzeuges (230, 342) befestigbar sind.

10. Rasen- oder Gartentraktor nach einem der Ansprüche 5 bis 9, dadurch gekennzeichnet, daß das Arbeitswerkzeug ein Planierschild (342) ist.

11. Rasen- oder Gartentraktor nach einem der Ansprüche 1 bis 9, dadurch gekennzeichnet, daß das Anbaugerät eine durch eine Traktorriemenscheibe (89) antreibbare Riemenantriebsanordnung aufweist, die so ausgebildet ist, daß der Antriebsriemen (246) durch Riemenführungen im Eingriffsbereich der Riemenscheiben des Anbaugerätes gehalten wird und eine Riemenschleife (304) zur Aufnahme der Antriebsriemenscheibe (89) des Traktors bildet.

12. Rasen- oder Gartentraktor nach Anspruch 11, dadurch gekennzeichnet, daß der Traktor in seinem Bereich, der vor den zapfenförmigen Befestigungsmitteln (28) liegt, eine Antriebsriemenscheibe (89) mit vertikaler Achse enthält, daß das Arbeitswerkzeug ein Gehäuse (230) enthält, in dem eine horizontal verlaufende Antriebswelle (242) drehbar gelagert ist, daß das Arbeitsgerät (220) Antriebsmittel aufweist, die mit der Antriebswelle (242) in Verbindung stehen, und eine horizontale, quer verlaufende, hinter dem Gehäuse (230) liegende Nebenwelle (241) enthält, wobei die Nebenwelle (241) an einem Ende eine Antriebsriemenscheibe (243) trägt, welche ihrerseits einen Antriebsriemen (246) aufnimmt, daß eine erste Anordnung einer Riemenleitrolle (248) den Antriebsriemen (246) in der Nähe der Antriebsriemenscheibe (243) führt, so daß dieser im Eingriffsbereich der Antriebsriemenscheibe (243) bleibt, und daß eine zweite Anordnung von Riemenleitrollen (264, 272) im hinteren Bereich des Arbeitsgeräterahmens (222) angeordnet und mit Riemenführungsmitteln (268, 278) ausgerüstet ist, die den Antriebsriemen (246) im Eingriffsbereich der Riemenleitrollen (264, 272) halten, wobei eine nach vorne ausgerichtete, vorwiegend horizontale Riemenschleife (304) gebildet wird, die mit der Riemenscheibe (89) des Traktors in Eingriff bringbar ist.

13. Rasen- oder Gartentraktor nach Anspruch 12, dadurch gekennzeichnet, daß die zweite Anordnung von Riemenleitrollen (264, 272) Riemenspannungseinstellmittel aufweist und daß eine Riemenleitrolle (272) auf einem Ende eines Hebels (274) befestigt ist, dessen anderes Ende mit den Riemenspannungseinstellmitteln verbunden ist.

14. Rasen- oder Gartentraktor nach einem der Ansprüche 1 bis 4, dadurch gekennzeichnet, daß ein Arbeitswerkzeug (110) am hinteren Ende des Anbaugeräterahmens (92) befestigbar ist und daß sich wenigstens ein erstes Befestigungsmittel (26) im hinteren Endbereich des Traktorrahmens (10) und wenigstens ein zweites Befestigungsmittel (28) im Bereich zwischen den Vorderrädern (12) und den Hinterrädern (14) befindet.

15. Rasen- oder Gartentraktor nach Anspruch 14, dadurch gekennzeichnet, daß der Anbaugeräterahmen (92) in seinem hinteren Bereich, jedoch vor der Lage der Transportmittel (194) ein erstes Paar quer beabstandeter Konsolen (162) mit nach vorne offenen Aussparungen (164) aufweist, die zur Aufnahme der ersten hinteren, zapfenförmigen Befestigungsmittel (26) des Traktorrahmens (10) geeignet sind.

16. Rasen- oder Gartentraktor nach Anspruch 14 oder 15, dadurch gekennzeichnet, daß der Anbaugeräterahmen (92) in seinem vorderen Bereich wenigstens eine zweite Konsole (166) mit nach oben offener Aussparung (168) aufweist, die zur lösbaren Aufnahme des zweiten vorderen, zapfenförmigen Befestigungsmittels (28) des Traktorrahmens (10) geeignet ist.

17. Rasen- oder Gartentraktor nach einem der Ansprüche 14 bis 16, dadurch gekennzeichnet, daß im vorderen Bereich des Anbaugeräterahmens (92) in der Nähe des zweiten Befestigungsmittels (166) wenigstens ein in vertikaler Richtung verschwenkbares Stützglied (208) angeordnet ist, welches geeignet ist, während der Montage in seiner vertikalen Position den Anbaugeräterahmen (92) am Traktorrahmen (10) abzustützen.

18. Rasen- oder Gartentraktor nach einem der Ansprüche 14 bis 17, dadurch gekennzeichnet, daß das Stützglied (208) so angeordnet ist, daß es sich während der Montage des Anbaugerätes (90) am Traktor an einem zweiten zapfenförmigen Befestigungsmittel (28) des Traktorrahmens (10) abstützt.

19. Rasen- oder Gartentraktor nach einem der Ansprüche 1 bis 18, dadurch gekennzeichnet, daß das Anbaugerät eine durch eine Traktorriemenscheibe antreibbare Riemenantriebsanordnung aufweist mit einem über eine erste Riemenscheibe (136) laufenden Primärantriebsriemen (146), der eine Riemenschleife zur Aufnahme der Antriebsriemenscheibe (89) des Traktors bildet, und einem über eine zweite Riemenscheibe (138) laufenden nachgeordneten Sekundärantriebsriemen (140), der in ständigem Eingriff mit der Antriebswelle des Arbeitsgerätes steht, wobei die erste und zweite Riemenscheibe (136, 138) über eine gemeinsame Antriebswelle (132) miteinander verbunden sind.

20. Rasen- oder Gartentraktor nach Anspruch 19, dadurch gekennzeichnet, daß der Traktor in seinem Bereich, der vor den zweiten vorderen Befestigungsmitteln (28) liegt, eine Antriebsriemenscheibe (89) mit vertikaler Achse enthält, daß das Arbeitswerkzeug (110) ein Gehäuse (108) enthält, in dem eine horizontal verlaufende Antriebswelle (112) drehbar gelagert ist, daß das Anbaugerät (90) Antriebsmittel aufweist, die mit der Antriebswelle (112) in Verbindung stehen, und eine horizontale, quer verlaufende, vor dem Gehäuse (108) liegende Nebenwelle (122) enthält, wobei die Nebenwelle (122) an einem Ende eine Antriebsriemenscheibe (126) trägt, welche ihrerseits einen Antriebsriemen (140) aufnimmt, daß im vorderen Bereich des Anbaugeräterahmens (92) eine im wesentlichen vertikale, parallel zur Antriebswelle des Traktors liegende Antriebswelle (132) angeordnet ist, welche an ihrem oberen Ende eine erste obere Riemenscheibe (136) und an ihrem unteren Ende eine zweite untere Riemenscheibe (138) trägt, daß ein Primärantriebsriemen (146) sich über die obere Riemenscheibe (136) und die Antriebsriemenscheibe (89) des Traktors erstreckt, während ein Sekundärantriebsriemen (140) von der unteren Riemenscheibe (138) und der Antriebsriemenscheibe (126) der Nebenwelle (122) aufgenommen wird, daß in der Nähe der Antriebsriemenscheibe (126) der Nebenwelle (122) Riemenleitmittel mit dem Sekundärantriebsriemen (140) in Eingriff stehen, die die Riemenführung um 90° verdrehen und den Riemen (140) in sauberem Eingriff mit der unteren Riemenscheibe (138) und der Antriebsriemenscheibe (126) der Nebenwelle (122) halten, daß eine Spannleitrolle (148) mit dem Primärantriebsriemen (146) in Eingriff steht und an einem schwenkbar am Arbeitsgeräterahmen (92) befestigten Hebel (160) angeordnet ist, und daß mit dem Hebel (160) Spannungseinstellmittel verbunden sind, die der wahlweisen Spannung oder Entspannung des Primärantriebsriemens (146) dienen, je nachdem, ob der Primärantriebsriemen (146) eine Antriebsverbindung zwischen Antriebsriemenscheibe (89) des Traktors und der oberen Riemenscheibe (136) herstellen soll oder nicht.

21. Rasen- oder Gartentraktor nach einem der Ansprüche 1 bis 4 und 14 bis 20, dadurch gekennzeichnet, daß das Arbeitswerkzeug vertikal verschwenkbar am hinteren Ende des Anbaugeräterahmens (92) befestigt ist, daß Verriegelungsmittel am Arbeitsgeräterahmen (92) vorgesehen sind, die das Arbeitswerkzeug in einer relativ zum Arbeitsgeräterahmen (92) angehobenen Lage halten, daß der Arbeitsgeräterahmen (92) ein Anhebegestänge trägt, welches mit dem Arbeitswerkzeug in Verbindung steht, und daß der Traktorrahmen (10) ein Hebesystem trägt, welches eine quer verlaufende Hubwelle (42) mit einem daran befestigten Kurbelarm (46) enthält, die mit dem Anhebegestänge des Arbeitsgeräterahmens (92) verbindbar sind, um ein Anheben oder Absenken des Arbeitswerkzeuges zu ermöglichen, wenn die Verriegelungsmittel gelöst sind.

22. Rasen- oder Gartentraktor nach einem der Ansprüche 1 bis 21, dadurch gekennzeichnet, daß die Transportmittel (194) des Arbeitsgeräterahmens (92) Verschwenkmittel (196) enthalten, die ein Verschwenken der Transportmittel (194) in eine und aus einer Aufbewahrlage ermöglichen.

23. Rasen- oder Gartentraktor nach einem der Ansprüche 1 bis 22, dadurch gekennzeichnet, daß die Transportmittel Räder (194, 322, 366) sind, welche über Haltearme (196, 368) am Anbaugeräterahmen (92, 222, 334) in der Nähe des Arbeitswerkzeuges (110, 230, 342) befestigbar sind.

## Claims

1. A lawn or garden tractor with an attachable implement, wherein the tractor has a frame (10) carried by pairs of front wheels (12) and rear wheels (14) and the implement comprises a longitudinal implement frame (92, 222, 334) on which working tools (110, 230, 342) are fixed, and the tractor frame (10) and also the implement frame (92, 222, 334) each comprise at least two pairs of hitch means in line with one another transverse to the direction of travel, the said pairs being arranged one behind the other in the direction of travel, which serve to attach the implement frame (92, 222, 334) to the tractor frame (10), wherein at least one pair of the hitch means are pins (26, 28) extending transverse to the direction of travel, fixed to the tractor frame (10), which are received by forked recesses (164, 168; 312; 356) of the implement frame (92, 222, 334), characterized in that transport wheels (194, 322, 366) are fixed to the implement frame (92, 222, 334), lying between the hitch means - (164, 168; 312; 356) on the one hand and the working tools (110, 230, 342) on the other hand and lie in the vicinity of a vertical plane running transverse to the frame (92, 222, 334) and through the centre of gravity of the implement, so that, with the implement attached, a part of the implement frame (92, 222, 334) extends under the tractor frame (10) in a region between the front wheels (12) and the rear wheels (14), while the working tools (110, 230, 342) are located outside this region, and in that the implement can be tilted about the axis of the transport wheels (194, 322, 366) for vertical approach of at least one pair of the hitch means (26, 164; 28, 312; 28, 356).

2. A lawn or garden tractor according to claim, 1, characterized in that the hitch means (26, 28) of the tractor frame (10) and the hitch means (162, 166; 310, 320; 354, 364) of the implement frame (92, 222, 334) assume such a position relative to each other that the implement frame (92, 222, 334) can be fixed at least partially between the front wheels (12) or the rear wheels (14) underneath the tractor frame (10).

3. A lawn or garden tractor according to claim 1 or 2, characterized in that the tractor frame (10) carries pin-formed hitch means (26, 28) extending transverse to the direction of travel and in that bracket-form hitch means (162, 166; 310, 354) are arranged on the implement frame (92, 222, 334) and are adapted to receive the pin-formed hitch means (26, 28) of the tractor frame (10).

4. A lawn or garden tractor according to any of claims 1 to 3, characterized in that the tractor frame (10) comprises coupling bores (88) running transverse to the direction of travel as hitch means and the implement frame (222, 334) carries receivers (320, 364) of clevis form as hitch means, with bores running transverse to the direction of travel, whereby a connection of the tractor hitch means and the implement hitch means is effected by pins which can be stuck through the corresponding bores.

5. A lawn or garden tractor according to any of claims 1 to 4, characterized in that the implement tool (230, 342) can be fixed to the front end of the implement frame (222, 334) and in that the at least two hitch means (28, 88) of the tractor frame (10) are arranged behind one another in the direction of travel and between the pairs of front wheels (12) and rear wheels (14).

6. A lawn or garden tractor according to claim 5, characterized in that the hitch means of the implement frame (222, 334) comprise a pair of transversely spaced brackets (310, 354), which are fixed to the rear end of the implement frame (222, 334) and have rearwardly open recesses (312, 356) for reception of the pin-formed hitch means (28) of the tractor frame (10).

7. A lawn or garden tractor according to claim 5 or 6, characterized in that the pin-formed hitch means (28) form a horizontal axis of rotation, about which the implement frame (222, 334) can tilt, and in that the tractor includes manually operable lifting means (44) fixed on the frame (10) and which can be coupled to a place on the implement frame (222, 334) which lies ahead of the hitch means (28), in order to be able to raise or lower the implement frame (222, 334) and thus adjust the height of the working tool (230, 342).

8. A lawn or garden tractor according to any of claims 5 to 7, characterized in that the implement frame (222, 334) includes right and left side pieces (224, 226; 332, 336) extending in the longitudinal direction, which are connected together at their rear end by a transverse piece (228, 338), and in that a pair of transversely spaced brackets (310, 354) is arranged at the rear end of the frame construction.

9. A lawn or garden tractor according to any of claims 5 to 8, characterized in that the transport means (322, 366) can be fixed in the vicinity of the working tool (230, 342).

10. A lawn or garden tractor according to any of claims 5 to 9, characterized in that the working tool is a dozer blade (342).

11. A lawn or garden tractor according to any of claims 1 to 9, characterized in that the implement comprises a belt drive arrangement which can be driven by a tractor pulley (89) and which is so formed that the drive belt (246) is retained by belt guides in the range of engagement of the pulleys of the implement and forms a belt loop (304) for reception of the drive pulley (89) of the tractor.

12. A lawn or garden tractor according to claim 11, characterized in that the tractor has a drive pulley (89) with a vertical axis in its region which lies in front of the pin-formed hitch means (28), in that the working tool has a housing (230) in which a horizontally extending drive shaft (242) is rotatably mounted, in that the implement (220) comprises drive means which are coupled to the drive shaft (242) and include a horizontal auxiliary shaft (241) lying behind the housing (230), the auxiliary shaft (241) carrying a drive pulley (243) at one end, which in turn receives a drive belt (246), in that a first arrangement of a belt guide roller (248) guides the drive belt (246) in the vicinity of the drive pulley (243), so that it stays within the range of engagement with the drive pulley (243), and in that a second arrangement of belt guide rollers (264, 272) is arranged in the rear region of the implement frame (222) and is equipped with belt guide means (268, 278) which hold the drive belt (246) in the range of engagement with the belt guide rollers (264, 272), whereby a forwardly directed, predominantly horizontal belt loop (304) is formed, which can be brought into engagement with the pulley (89) of the tractor.

13. A lawn or garden tractor according to claim 12, characterized in that the second arrangement of belt guide rollers (264, 272) comprises belt tension adjusting means, and in that one belt guide roller (272) is fixed on the end of a lever (274) whose other end is connected to the belt tension adjusting means.

14. A lawn or garden tractor according to any of claims 1 to 4, characterized in that a working tool (110) can be fixed to the rear end of the implement frame (92) and in that at least one first hitch means (26) is located in the rear end region of the tractor frame (10) and at least one second hitch means (28) is located in the region between the front wheels (12) and the rear wheels (14).

15. A lawn or garden tractor according to claim 14, characterized in that the implement frame (92) comprises a first pair of transversely spaced brackets (162) in its rear region, but in front of the position of the transport means (194), the brackets having forwardly open recesses (164) which are adapted to receive the first, rear, pin-formed hitch means (26) of the tractor frame (10).

16. A lawn or garden tractor according to claim 14 or 15, characterized in that the implement frame (92) comprises at least one second bracket (166) in its front region, with an upwardly open recess (168) which is adapted for releasable reception of the second, forward, pin-formed hitch means (28) of the tractor frame (10).

17. A lawn or garden tractor according to any of claims 14 to 16, characterized in that at least one support member (208) which can swing in a vertical direction is arranged in the forward region of the implement frame (92) in the vicinity of the second hitch means (166), this support member being adapted to support the implement frame (92) on the tractor frame in its vertical position during the coupling.

18. A lawn or garden tractor according to any of claims 14 to 17, characterized in that the support member (208) is so arranged that it bears on a second pin-formed hitch means (28) of the tractor frame (10) during coupling of the implement (90) to the tractor.

19. A lawn or garden tractor according to any of claims 1 to 18, characterized in that the implement comprises a belt drive arrangement drivable by a tractor pulley and having a primary drive belt (146) running over a first pulley (136) and forming a belt loop for reception of the drive pulley (89) of the tractor, and a following secondary drive belt running over a second pulley (138) and which is in constant engagement with the drive shaft of the implement, wherein the first and second pulleys (136, 138) are connected together by a common drive shaft (132).

20. A lawn or garden tractor according to claim 19, characterized in that the tractor comprises a drive pulley (89) with a vertical axis in its region which lies in front of the second, forward hitch means (28), in that the working tool (110) comprises a housing (108), in which a horizontally extending drive shaft (112) is rotatably mounted, in that the implement (90) comprises drive means which are connected to the drive shaft (112) and a horizontal, transversely extending auxiliary shaft (122) lying forward of the housing, wherein the auxiliary shaft (122) carries a drive pulley (126) at one end, which in turn receives a drive belt (140), in that a substantially vertical drive shaft (132) lying substantially parallel to the drive shaft of the tractor is arranged in the forward region of the implement frame (92), this shaft carrying a first, upper pulley (136) at its upper end and a second, lower pulley (138) at its lower end, in that a primary drive belt (146) extends over the upper pulley (136) and the drive pulley (89) of the tractor, while a secondary drive belt (140) is received by the lower pulley (138) and the drive pulley (126) of the auxiliary shaft (122), in that belt guide means are in engagement with the secondary drive belt (140) in the vicinity of the drive pulley (126) of the auxiliary shaft (122), which turn the guiding of the belt through 90° and hold the belt (140) in clean engagement with the lower pulley (138) and the drive pulley (126) of the auxiliary shaft (122), in that a tensioning guide roller (148) is in engagement with the primary drive belt (146) and is arranged on a lever (160) pivotally attached to the implement frame (92), and in that tension adjusting means are connected to the lever (160) and serve for selective tensioning or slackening of the primary drive belt (146), depending on whether the primary drive belt (146) is to effect a drive connection between the drive pulley (89) of the tractor and the upper pulley (136), or not.

21. A lawn or garden tractor according to any of claims 1 to 4 and 14 to 20, characterized in that the working tool is attached to the rear end of the implement frame (92) so as to be capable of vertical pivoting, in that locking means are provided on the implement frame (92) which the hold the working tool in raised position relative to the implement frame (92), in that the implement frame (92) carries a lifting rod which is connected to the working tool, and in that the tractor frame (10) carries a lift system, which comprises a transversely extending lift shaft (42) with a crank arm (46) fixed thereon, which can be coupled to the lift rod of the implement frame (92), in order to facilitate raising or lowering of the working tool, when the latch means are released.

22. A lawn or garden tractor according to any of claims 1 to 21, characterized in that the transport means (194) of the implement frame (92) comprise swing means (196) which facilitate swinging the transport means (194) into and out of a stowing position.

23. A lawn or garden tractor according to any of claims 1 to 22, characterized in that the transport means are wheels (194, 322, 366) which can be attached to the implement frame (92, 222, 334) in the vicinity of the working tool (110, 230, 342) by means of retaining arms (196, 368).

## Revendications

1. Tracteur de jardinage ou tracteur-tondeuse avec un équipement porté de travail pouvant être monté sur le tracteur, le tracteur présentant un châssis de tracteur (10) porté par des paires de roues avant (12) et de roues arrière (14), l'équipement porté présentant un châssis longitudinal d'équipement porté (92, 222, 334) auquel est fixé un outil de travail (110, 230, 342), et le châssis de tracteur ainsi que le châssis d'équipement porté (92, 222, 334) comprenant chacun au moins deux paires, disposées l'une après l'autre dans la direction de marche, de moyens de fixation qui sont mutuellement alignés transversalement à la direction de marche et servent à monter le châssis d'équipement porté (92, 222, 334) sur le châssis de tracteur (10), au moins une paire de moyens de fixation consistant en des tenons (26, 28), s'étendant transversalement à la direction de marche et fixés sur le châssis de tracteur (10), qui sont reçus par des évidements en forme de chape (164, 168 ; 312 ; 356) du châssis d'équipement porté (92, 222, 334), **caractérisé** en ce que des roues de transport (194, 322, 366) sont fixées au châssis d'équipement porté (92, 222, 334) et se trouvent entre les moyens de fixation (164, 168 ; 312 ; 356) d'une part et l'outil de travail (110, 230, 342) d'autre part, et à proximité d'un plan vertical s'étendant transversalement à la direction de marche et passant par le centre de gravité de l'équipement porté, de sorte que, lorsque l'équipement porté est monté, une partie du châssis d'équipement porté (92, 222, 334) s'étend dans une région comprise entre les roues avant (12) et les roues arrière (14) en dessous du châssis de tracteur (10) tandis que l'outil de travail (110, 230, 342) se trouve en dehors de cette région, et que l'équipement porté peut être pivoté autour de l'axe des roues de transport (194, 322, 366) pour rapprocher verticalement au moins une paire de moyens de fixation (26, 164 ; 28, 312 ; 28, 356).

2. Tracteur de jardinage ou tracteur-tondeuse selon la revendication 1, **caractérisé** en ce que les moyens de fixation (26, 28) du châssis de tracteur (10) et les moyens de fixation (162, 166 ; 310, 320 ; 354, 364) du châssis d'équipement porté (92, 222, 334) prennent une position relative telle que le châssis d'équipement porté (92, 222, 334) peut être fixé, en dessous du châssis de tracteur (10), au moins en partie entre les roues avant (12) ou, respectivement, arrière (14).

3. Tracteur de jardinage ou tracteur-tondeuse selon la revendication 1 ou 2, **caractérisé** en ce que le châssis de tracteur (10) porte des moyens de fixation en forme de tenons (26, 28) s'étendant transversalement à la direction de marche, et en ce que des moyens de fixation en forme de consoles (162, 166 ; 310 ; 354) sont disposés sur le châssis d'équipement porté (92, 222, 334) et sont aptes à recevoir les moyens de fixation en forme de tenons (26, 28) du châssis de tracteur (10).

4. Tracteur de jardinage ou tracteur-tondeuse selon l'une quelconque des revendications 1 à 3, **caractérisé** en ce que le châssis de tracteur (10) présente, comme moyens de fixation, des perçages d'assemblage (88) s'étendant transversalement à la direction de marche, et le châssis d'équipement porté (222, 334) porte, comme moyens de fixation, des éléments récepteurs en forme de chapes (320, 364) dotés de perçages s'étendant transversalement à la direction de marche, l'assemblage des moyens de fixation du tracteur et de ceux de l'équipement porté s'effectuant au moyen de boulons enfilés dans les perçages correspondants.

5. Tracteur de jardinage ou tracteur-tondeuse selon l'une quelconque des revendications 1 à 4, **caractérisé** en ce que l'outil porté (230, 342) peut être fixé à l'extrémité avant du châssis d'équipement porté (222, 334), et en ce que les moyens de fixation ((28, 88) du châssis de tracteur (10), qui sont au moins au nombre de deux, sont disposés l'un après l'autre dans la direction de marche et entre les paires de roues avant (12) et arrière (14).

6. Tracteur de jardinage ou tracteur-tondeuse selon la revendication 5, **caractérisé** en ce que les moyens de fixation du châssis d'équipement porté (222, 334) comprennent une paire de consoles (310, 354) transversalement distantes, fixées à l'extrémité arrière du châssis d'équipement porté (222, 334) et dotées, pour recevoir les moyens de fixation en forme de tenons (28) du châssis de tracteur (10), d'évidements (312, 356) ouverts vers l'arrière.

7. Tracteur de jardinage ou tracteur-tondeuse selon la revendication 5 ou 6, **caractérisé** en ce que les moyens de fixation en forme de tenons (28) forment un axe de rotation horizontal autour duquel peut pivoter le châssis d'équipement porté (222, 334), et en ce que le tracteur comprend un moyen de levage (44), fixé sur le châssis (10) et manoeuvrable à la main, qui peut être relié à un point du châssis d'équipement porté (222, 334) situé avant les moyens de fixation (28), afin de relever ou abaisser le châssis d'équipement porté (222, 334) et régler ainsi la hauteur de l'outil de travail (230, 342).

8. Tracteur de jardinage ou tracteur-tondeuse selon l'une quelconque des revendications 5 à 7, **caractérisé** en ce que le châssis d'équipement porté (222, 334) comprend des parties latérales droite et gauche (224, 226 ; 332, 336) s'étendant en direction longitudinale et mutuellement reliées par une partie transversale (228, 338) à leurs extrémités arrière, et en ce qu'une paire de consoles transversalement distantes (310, 354) est disposée à l'extrémité arrière de la structure de châssis.

9. Tracteur de jardinage ou tracteur-tondeuse selon l'une quelconque des revendications 5 à 8, **caractérisé** en ce que les moyens de transport (322, 326) peuvent être fixés à proximité de l'outil de travail (230, 342).

10. Tracteur de jardinage ou tracteur-tondeuse selon l'une quelconque des revendications 5 à 9, **caractérisé** en ce que l'outil de travail est une lame niveleuse (342).

11. Tracteur de jardinage ou tracteur-tondeuse selon l'une quelconque des revendications 1 à 9, **caractérisé** en ce que l'équipement porté présente un ensemble de transmission par courroie, pouvant être entraîné par une poulie (89) du tracteur et conçu de telle sorte que la courroie d'entraînement (246) est maintenue par des guidages de courroie dans la région d'engagement des poulies de l'équipement porté et forme une boucle (304) pour recevoir la poulie d'entraînement (89) du tracteur.

12. Tracteur de jardinage ou tracteur-tondeuse selon la revendication 11, **caractérisé** en ce que le tracteur comporte une poulie d'entraînement (89) à axe vertical dans sa région avant située avant les moyens de fixation en forme de tenons (28), en ce que l'outil de travail comporte un carter (230) dans lequel est monté à rotation un arbre d'entraînement (242) s'étendant horizontalement, en ce que l'équipement de travail (220) possède un moyen d'entraînement relié à l'arbre d'entraînement (242) et comprenant un arbre intermédiaire horizontal (241), s'étendant transversalement et situé derrière le carter (230), l'arbre intermédiaire (241) portant à une extrémité une poulie d'entraînement (243) qui reçoit elle-même une courroie d'entraînement (246), en ce qu'un premier agencement de galet guide-courroie (248) guide la courroie d'entraînement (246) au voisinage de la poulie d'entraînement (243), de sorte que cette dernière reste dans la région d'engagement de la poulie d'entraînement (243), et en ce qu'un second agencement de galets guide-courroie (264, 272) est disposé dans la région arrière du châssis d'équipement porté (222) et est équipé de moyens de guidage de courroie (268, 278) qui maintiennent la courroie d'entraînement (246) dans la région d'engagement des galets guide-courroie (264, 272), une boucle de courroie dirigée vers l'avant et essentiellement horizontale (304) étant formée, qui peut être amenée en engagement avec la poulie (89) du tracteur.

13. Tracteur de jardinage ou tracteur-tondeuse selon la revendication 12, **caractérisé** en ce que le second agencement de galets guide-courroie (264, 272) présente un moyen de réglage de tension de courroie et en ce qu'un galet guide-courroie (272) est fixé à une extrémité d'un levier (274), dont l'autre extrémité est reliée au moyen de réglage de tension de courroie.

14. Tracteur de jardinage ou tracteur-tondeuse selon l'une quelconque des revendications 1 à 4, **caractérisé** en ce qu'un outil de travail (110) peut être fixé à l'extrémité arrière du châssis d'équipement porté (92), et en ce qu'au moins un premier moyen de fixation (26) se trouve dans la région terminale arrière du châssis de tracteur (10), et au moins un second moyen de fixation (28) dans la région comprise entre les roues avant (12) et arrière (14).

15. Tracteur de jardinage ou tracteur-tondeuse selon la revendication 14, **caractérisé** en ce que le châssis d'équipement porté (92) présente, dans sa région arrière mais avant l'emplacement des moyens de transport (194), une première paire de consoles transversalement distantes (162) dotées d'évidements (164) ouverts vers l'avant, qui sont aptes à recevoir les premiers moyens de fixation en forme de tenons, arrière (26) du châssis de tracteur (10).

16. Tracteur de jardinage ou tracteur-tondeuse selon la revendication 14 ou 15, **caractérisé** en ce que le châssis d'équipement porté (92) présente dans sa région avant au moins une seconde console (166) dotée d'un évidement (168) ouvert vers le haut, qui est apte à recevoir de manière détachable le second moyen de fixation en forme de tenon, avant (28) du châssis de tracteur (10).

17. Tracteur de jardinage ou tracteur-tondeuse selon l'une quelconque des revendications 14 à 16, **caractérisé** en ce qu'au moins un élément d'appui (208), pouvant être pivoté en direction verticale et apte à appuyer, pendant le montage, le châssis d'équipement porté (92) dans sa position verticale contre le châssis de tracteur (10), est disposé au voisinage du second moyen de fixation (166) dans la région avant du châssis d'équipement porté (92).

18. Tracteur de jardinage ou tracteur-tondeuse selon l'une quelconque des revendications 14 à 17, **caractérisé** en ce que l'élément d'appui (208) est disposé de telle sorte que, pendant le montage de l'équipement porté (90) sur le tracteur, il s'appuie contre un second moyen de fixation en forme de tenon (28) du châssis de tracteur (10).

19. Tracteur de jardinage ou tracteur-tondeuse selon l'une quelconque des revendications 1 à 18, **caractérisé** en ce que l'équipement porté présente un ensemble de transmission par courroie pouvant être entraîné par une poulie du tracteur, avec une courroie d'entraînement primaire (146) qui tourne autour d'une première poulie (136) et forme une boucle pour recevoir la poulie d'entraînement (89) du tracteur, et avec une courroie d'entraînement secondaire (140) qui tourne autour d'une seconde poulie (138) et est en permanence en prise avec l'arbre d'entraînement de l'équipement de travail, la première et la seconde poulies (136, 138) étant mutuellement reliées par un arbre d'entraînement commun (132).

20. Tracteur de jardinage ou tracteur-tondeuse selon la revendication 19, **caractérisé** en ce que le tracteur comporte une poulie d'entraînement (89) à axe vertical dans sa région située avant les seconds moyens de fixation, avant (28), en ce que l'outil de travail (110) comporte un carter (108) dans lequel est monté à rotation un arbre d'entraînement (112) s'étendant horizontalement, en ce que l'équipement porté (90) présente un moyen d'entraînement relié à l'arbre d'entraînement (112) et comprenant un arbre intermédiaire horizontal (122), s'étendant transversalement et situé devant le carter (108), l'arbre intermédiaire (122) portant à une extrémité une poulie d'entraînement (126) qui reçoit elle-même une courroie d'entraînement (140), en ce qu'un arbre d'entraînement (132), sensiblement vertical et parallèle à l'arbre d'entraînement du tracteur, est disposé dans la région avant du châssis d'équipement porté (92) et porte à son extrémité supérieure une première poulie, supérieure (136) et à son extrémité inférieure une seconde poulie, inférieure (138), en ce qu'une courroie d'entraînement primaire (146) passe par la poulie supérieure (136) et par la poulie d'entraînement (89) du tracteur, tandis qu'une courroie d'entraînement secondaire (140) est reçue par la poulie inférieure (138) et par la poulie d'entraînement (126) de l'arbre intermédiaire (122), en ce que des moyens de guidage de courroie sont en prise avec la courroie d'entraînement secondaire (140) au voisinage de la poulie d'entraînement (126) de l'arbre intermédiaire (122), moyens qui font tourner le guide-courroie de 90° et maintiennent la courroie (140) en engagement correct avec la poulie inférieure (138) et avec la poulie d'entraînement (126) de l'arbre intermédiaire (122), en ce qu'un galet-tendeur (148) est en prise avec la courroie d'entraînement primaire (146) et est disposé sur un levier (160) fixé à pivotement sur le châssis d'équipement de travail (92), et en ce qu'un moyen de réglage de tension est relié au levier (160) et sert, au choix, à tendre ou détendre la courroie d'entraînement primaire (146), selon que cette dernière doit ou non réaliser une liaison d'entraînement entre la poulie d'entraînement (89) du tracteur et la poulie supérieure (136).

21. Tracteur de jardinage ou tracteur-tondeuse selon l'une quelconque des revendications 1 à 4 et 14 à 20, **caractérisé** en ce que l'outil de travail est fixé à pivotement vertical à l'extrémité arrière du châssis d'équipement de travail (92), en ce qu'un moyen de verrouillage est prévu sur le châssis d'équipement de travail (92) et maintient l'outil de travail dans une position relevée par rapport au châssis d'équipement de travail (92), en ce que le châssis d'équipement de travail (92) porte une tringlerie de levage qui est reliée à l'outil de travail, et en ce que le châssis de tracteur (10) porte un système de levage comprenant un arbre de levage (42) auquel est fixé un bras de manivelle (46), qui peut être relié à la tringlerie de levage du châssis d'équipement de travail (92) afin de pouvoir relever ou abaisser l'outil de travail lorsque le moyen de verrouillage est déverrouillé.

22. Tracteur de jardinage ou tracteur-tondeuse selon l'une quelconque des revendications 1 à 21, **caractérisé** en ce que les moyens de transport (194) du châssis d'équipement de travail (92) comprennent des moyens de pivotement (196) permettant de pivoter les moyens de transport (194) dans et hors d'une position d'entreposage.

23. Tracteur de jardinage ou tracteur-tondeuse selon l'une quelconque des revendications 1 à 22, **caractérisé** en ce que les moyens de transport sont des roues (194, 322, 366) qui, au moyen de bras de maintien (196, 368), peuvent être fixées sur le châssis d'équipement porté (92, 222, 334) à proximité de l'outil de travail (110, 230, 342).
